# EUROPEAN PATENT APPLICATION

(11) **EP 4 425 823 A1**
(43) Date of publication of application: **04.09.2024**
(21) Application number: 24169853.9
(22) Date of filing: 28.01.2021
(51) Int. Cl.: H04L 9/08, H04L 9/40

(54) **KEY OBTAINING METHOD AND APPARATUS**

(30) Priority: 04.02.2020 CN 202010079720
(62) Divisional of application: 21749985.4
(71) Applicant: Huawei Technologies Co., Ltd., Shenzhen, Guangdong 518129 (CN)
(72) Inventor: DENG, Juan, SHENZHEN, 518129 (CN); ZHANG, Bo, SHENZHEN, 518129 (CN)
(74) Representative: Körber, Martin Hans

(57) **Abstract**

This application discloses a key obtaining method, where the method includes: obtaining, by an AUSF, an authentication and key management for applications anchor function AKMA key and/or a unique key identifier KID of the AKMA key; obtaining, by an AMF/SEAF, a fourth message from the AUSF; and sending a fifth message to UE based on the fourth message, so that the UE obtains the KID and/or the AKMA key based on the fifth message. Embodiments of this application disclose a method for obtaining or generating the AKMA key and the unique key identifier corresponding to the AKMA key, to ensure smooth key negotiation between the UE and an AF and improve communication security between the UE and the AF.

## Description

This application claims priority to Chinese Patent Application No. 202010079720.7, filed with the China National Intellectual Property Administration on February 4, 2020, and entitled "KEY OBTAINING METHOD AND APPARATUS", which is incorporated herein by reference in its entirety.

### TECHNICAL FIELD

This application relates to the field of communication technologies, and in particular, to a key obtaining method and apparatus.

### BACKGROUND

In a key architecture for authentication and key management for applications (Authentication and Key Management for Applications, AKMA), various keys are generated on each of a user equipment (User Equipment, UE) side and a network side. On the network side, after UE completes primary authentication, an authentication server function (Authentication Server Function, AUSF) may generate an AKMA key K_{AKMA} based on an AUSF key K_{AUSF} generated in the primary authentication process. The K_{AKMA} is a key per UE (in other words, each UE has a dedicated K_{AKMA}). The AUSF transfers the generated K_{AKMA} to an AKMA anchor function (AKMA Anchor Function, AAnF). The AAnF then generates an application key K_{AF} for an application function (Application Function, AF) based on the K_{AKMA}. The K_{AF} is a key per UE and per application (in other words, one UE uses a dedicated K_{AF} when accessing one AF). On the UE side, the UE uses same parameters and a same algorithm as those on the network side to generate a K_{AUSF} in the authentication process. After authentication succeeds, the UE may generate a K_{AKMA} based on the K_{AUSF} by using same parameters and a same algorithm as those on the network side, and generate a K_{AF} based on the K_{AKMA} by using same parameters and a same algorithm as those on the network side. Then, on the UE side and the network side, traffic protection is performed between the UE and the AF based on the K_{AF}.

In this process, each K_{AKMA} is identified by a unique key identifier K_{AKMA} ID (referred to as a KID in the present invention). When the UE accesses the AF, the UE sends a KID to the AF, to indicate a K_{AKMA} used by the UE. After receiving the KID, the AF sends the KID to the AAnF. Then, the AAnF generates a K_{AF} by using the K_{AKMA} identified by the KID and sends the K_{AF} to the AF. In this way, it is ensured that the UE and the AF use the same K_{AF}, that is, the K_{AF} is generated by using the K_{AKMA} identified by the KID, thereby completing key negotiation between the UE and the AF. There is no research on generation and update of the KID in the conventional technology. Consequently, the key negotiation between the UE and the AF cannot be performed.

### SUMMARY

Embodiments of this application provide a key obtaining method and apparatus, to obtain a key in a process of communication between a user terminal and an application function.

According to a first aspect, a key obtaining method is provided, where the method is applied to an authentication server function AUSF. The method includes:
obtaining an authentication and key management for applications anchor key K_{AKMA} and/or a unique key identifier KID of the K_{AKMA}.

In a possible design, the obtaining an authentication and key management for applications anchor key K_{AKMA} and/or a unique key identifier KID of the K_{AKMA} includes:
receiving a first message sent by an access and mobility management function or a security anchor function AMF/SEAF, and obtaining the KID and/or the K_{AKMA} based on the first message.

In a possible design, the first message includes the KID, and the obtaining the KID and/or the K_{AKMA} based on the first message includes: obtaining the KID in the first message and/or generating the K_{AKMA} based on the KID.

In a possible design, the first message includes second indication information, and the obtaining the KID and/or the K_{AKMA} based on the first message includes:
generating the KID and/or the K_{AKMA} based on the second indication information, where the second indication information is used to request or indicate the AUSF to generate the KID and/or the K_{AKMA}.

In this embodiment of this application, UE actively sends the KID or first indication information to the AMF/SEAF, and the AMF/SEAF forwards the KID to the AUSF or sends the second indication information to the AUSF based on the first indication information. Then, the AUSF generates the K_{AKMA} based on the received KID, or generates the KID and/or the K_{AKMA} based on the second indication information. The first indication information is used to request or indicate to generate the KID and/or the K_{AKMA}. In this process, the KID and/or the K_{AKMA} may be generated based on a requirement of the UE. This implements generation of the key based on the requirement, and avoids generating, storing, and managing an unnecessary key.

In a possible design, after the first message is received, the obtaining the KID and/or the KAKMA based on the first message further includes:
sending a second message to a unified data management UDM function based on the first message, where the second message includes a permission obtaining indication, the permission obtaining indication is used to obtain first permission information of the UE, and the first permission information is used to indicate that the UE is capable of using an authentication and key management for applications AKMA service; and
when it is determined that the first permission information of the UE is obtained, generating the KID and/or the K_{AKMA}.

In this embodiment of this application, the AUSF actively sends the permission obtaining indication to the UDM, to obtain the first permission information, where the first permission information is used to indicate that the UE is capable of using the authentication and key management for applications AKMA service. Then, the AUSF generates the K_{AKMA} and/or the KID based on the obtained first permission information. This can ensure that a key is generated only for authorized user equipment on a network side and avoid generating an unauthorized key.

In a possible design, the first message is an authentication service request, and the authentication service request is used to request the AUSF to perform authentication on the UE.

In a possible design, the authentication service request includes an authentication response obtained when the AMF/SEAF initiates an authentication request to the UE.

In a possible design, the second message is used to request an authentication vector of the UE from the UDM, or the second message is used to notify the UDM of an authentication result.

In a possible design, the obtaining an authentication and key management for applications anchor key K_{AKMA} and/or a unique key identifier KID of the K_{AKMA} includes:
receiving a third message sent by the UDM, and generating the KID and/or the K_{AKMA} based on the third message.

In a possible design, the third message includes third indication information or first permission information, and the third indication information is used to indicate the AUSF to generate the KID and/or the K_{AKMA}. The generating the KID and/or the K_{AKMA} based on the third message includes generating the KID and/or the K_{AKMA} based on the third indication information or the first permission information.

In this embodiment of this application, the UDM actively obtains the first permission information of UE, and sends the first permission information or the third indication information to the AUSF by using the third message, so that the AUSF generates the K_{AKMA} and/or the KID based on the first permission information or the third indication information. Before the UE initiates an application, the UDM may actively prompt the AUSF to pre-generate the K_{AKMA} and/or the KID, to increase key obtaining efficiency.

In a possible design, the third message is an authentication service response message, and is used to send an authentication vector of UE to the AUSF.

In a possible design, the third message is an authentication result confirmation response message, and is used to respond to an authentication result confirmation request message sent by the AUSF.

According to a second aspect, a key obtaining method is provided, where the method is applied to access and mobility management or a security anchor function AMF/SEAF. The method includes:
obtaining a fourth message from an AUSF; and
sending a fifth message to UE based on the fourth message, so that the UE obtains the KID and/or the K_{AKMA} based on the fifth message.

In a possible design, the fifth message includes the KID, and is used to enable the UE to obtain the KID in the fifth message, and/or generate the K_{AKMA} based on the KID.

In a possible design, the fifth message includes fifth indication information, and the fifth indication information is used to indicate the UE to generate the KID and/or the K_{AKMA}.

In a possible design, before the fourth message is received, the method further includes:
sending a first message to the AUSF, so that the AUSF generates the KID and/or the K_{AKMA} based on the first message.

According to a third aspect, an AUSF network element is provided, including a processing module. The processing module is configured to:
obtain an authentication and key management for applications anchor key K_{AKMA} and/or a unique key identifier KID of the K_{AKMA}.

In a possible design, the AUSF network element further includes a receiving module, configured to receive a first message sent by an access and mobility management function or a security anchor function AMF/SEAF; and
the processing module is configured to obtain the KID and/or the K_{AKMA} based on the first message.

In a possible design, the first message includes the KID, and the processing module is specifically configured to:
obtain the KID in the first message, and/or generate the K_{AKMA} based on the KID.

In a possible design, the first message includes first indication information, and the processing module is specifically configured to generate the KID and/or the K_{AKMA} based on the first indication information.

In a possible design, the AUSF network element further includes a sending module, configured to send a second message to a unified data management UDM function based on the first message, where the second message includes a permission obtaining indication, the permission obtaining indication is used to obtain first permission information of the UE, and the first permission information is used to indicate that the UE is capable of using an authentication and key management for applications AKMA service; and
the processing module is configured to: when it is determined that the first permission information of the UE is obtained, generate the KID and/or the K_{AKMA}.

In a possible design, the receiving module is configured to receive a third message sent by the UDM, where the third message includes third indication information; and
the processing module is configured to generate the KID and/or the K_{AKMA} based on the third indication information.

According to a fourth aspect, an AMF/SEAF network element is provided. The network element includes:
a receiving module, configured to obtain a fourth message from an AUSF; and
a sending module, configured to send a fifth message to UE based on the fourth message, so that the UE obtains the KID and/or the K_{AKMA} based on the fifth message.

In a possible design, the sending module is further configured to send a first message to the AUSF, so that the AUSF generates the KID and/or the K_{AKMA} based on the first message.

According to a fifth aspect, an embodiment of this application provides a communication apparatus. The apparatus has a function of implementing the terminal in any one of the first aspect or the possible implementations of the first aspect, or has a function of implementing the control plane network element in any one of the first aspect or the possible implementations of the second aspect.

The apparatus may be a terminal, or may be a chip included in a terminal. The function of the communication device may be implemented by hardware, or may be implemented by hardware by executing corresponding software. The hardware or the software includes one or more modules corresponding to the function.

The apparatus may be a network device, or may be a chip included in a network device. The function of the communication device may be implemented by hardware, or may be implemented by hardware by executing corresponding software. The hardware or the software includes one or more modules corresponding to the function.

In a possible design, a structure of the apparatus includes a processing module and a transceiver module. The processing module is configured to support the apparatus to perform the method in any one of the first aspect or the possible implementations of the first aspect, or perform the method in any one of the second aspect or the possible implementations of the second aspect.

In another possible design, a structure of the apparatus includes a processor, and may further include a memory. The processor is coupled to the memory, and may be configured to execute computer program instructions stored in the memory, to enable the apparatus to perform the method in any one of the first aspect or the possible implementations of the first aspect, or perform the method in any one of the second aspect or the possible implementations of the second aspect. Optionally, the apparatus further includes a communication interface, and the processor is coupled to the communication interface. When the apparatus is the network device, the communication interface may be a transceiver or an input/output interface. When the apparatus is the chip included in the network device, the communication interface may be an input/output interface of the chip. Optionally, the transceiver may be a transceiver circuit, and the input/output interface may be an input/output circuit.

According to a sixth aspect, an embodiment of this application provides a chip system. The chip system includes a processor, and the processor is coupled to a memory. The memory is configured to store programs or instructions, and when the programs or the instructions are executed by the processor, the chip system is enabled to implement the method in any one of the first aspect or the possible implementations of the first aspect, or perform the method in any one of the second aspect or the possible implementations of the second aspect.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a seventh aspect, an embodiment of this application provides a computer-readable storage medium. The computer-readable storage medium stores computer programs or instructions, and when the computer programs or the instructions are executed, a computer is enabled to perform the method in any one of the first aspect or the possible implementations of the first aspect, or perform the method in any one of the second aspect or the possible implementations of the second aspect.

According to an eighth aspect, an embodiment of this application provides a computer program product. When a computer reads and executes the computer program product, the computer is enabled to perform the method in any one of the first aspect or the possible implementations of the first aspect, or perform the method in any one of the second aspect or the possible implementations of the second aspect.

According to a ninth aspect, an embodiment of this application provides a communication system. The communication system includes the foregoing one or more processing network elements and management network elements. Optionally, the communication system may further include a control plane device, another network device, and/or a terminal.

### BRIEF DESCRIPTION OF DRAWINGS

To describe technical solutions in embodiments of this application or the conventional technology more clearly, the following briefly describes accompanying drawings used in describing the embodiments.
FIG. 1 is a schematic diagram of an AKMA network architecture according to an embodiment of this application;
FIG. 2 is a diagram of an AKMA key architecture according to an embodiment of this application;
FIG. 3 is a schematic diagram of key negotiation when UE accesses an AF according to an embodiment of this application;
FIG. 4A is a schematic flowchart of a key obtaining method according to an embodiment of this application;
FIG. 4B is a schematic flowchart of a method for obtaining a KID and/or a K_{AKMA} according to an embodiment of this application;
FIG. 4C is a schematic flowchart of another method for obtaining a K_{AKMA} and/or a KID according to an embodiment of this application;
FIG. 4D is a schematic flowchart of another method for obtaining a KID and/or a K_{AKMA} according to an embodiment of this application;
FIG. 4E is a schematic flowchart of another method for obtaining a KID and/or a K_{AKMA} according to an embodiment of this application;
FIG. 4F is a schematic flowchart of another method for obtaining a KID and/or a K_{AKMA} according to an embodiment of this application;
FIG. 5 is a schematic flowchart of a UE identity authentication method according to an embodiment of this application;
FIG. 6A is a schematic flowchart of a method for updating a KID and/or a K_{AKMA} according to an embodiment of this application;
FIG. 6B is a schematic flowchart of another method for updating a KID and/or a K_{AKMA} according to an embodiment of this application;
FIG. 7 is a structural block diagram of a communication apparatus according to an embodiment of this application;
FIG. 8 is a structural block diagram of another communication apparatus according to an embodiment of this application; and
FIG. 9 is a schematic diagram of a hardware structure of a communication apparatus according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including", "having", and any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in the specification means that a particular characteristic, structure, or feature described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that the embodiments described in the specification may be combined with another embodiment.

"A plurality of" refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

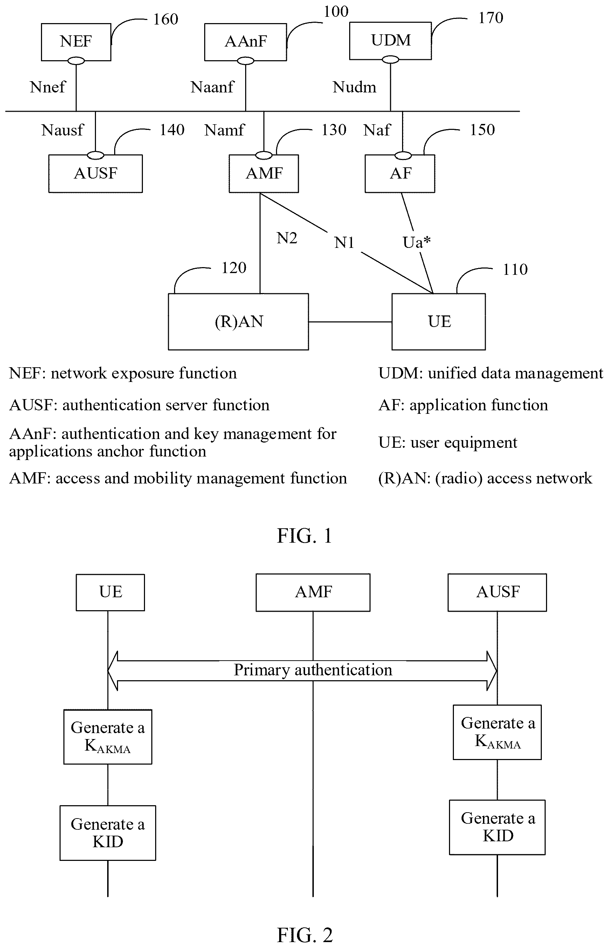

The following describes terms in the embodiments of this application by using FIG. 1 as an example.

FIG. 1 is a schematic diagram of an AKMA network architecture according to an embodiment of this application. Compared with a conventional fifth generation mobile communication technology (5th Generation Mobile Networks, 5G) architecture, a new network function (Network Function, NF), namely, an AKMA anchor function (AKMA Anchor Function, AAnF) 100 is added in the AKMA network architecture. The AAnF may be an independently deployed NF, or may be jointly deployed with another NF. The AAnF is used to support an AKMA anchor key (K_{AKMA}) and generate an application key (K_{AF}). In addition, other parts in FIG. 1 and network functions in the embodiments of this application are as follows:

A terminal device 110 may also be referred to as user equipment (User Equipment, UE), a terminal, or the like. The terminal device is a device with a wireless transceiver function, and may communicate with one or more core networks (Core Network, CN) by using an access network device in a (radio) access network ((Radio) Access Network, (R)AN) 120. The terminal device may be deployed on land, including an indoor terminal device, an outdoor terminal device, a handheld terminal device, a wearable terminal device, or a vehicle-mounted terminal device. The terminal device may alternatively be deployed on a water surface, for example, on a steamboat. The terminal device may alternatively be deployed in the air, for example, on a plane, a balloon, or a satellite. The terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal in industrial control (Industrial Control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

The (radio) access network ((Radio) Access Network, (R)AN) 120 is used to provide a network access function for authorized user equipments in a specific area, and can use transmission tunnels of varying quality based on levels, service requirements, and the like of the user equipments. For example, the (R)AN may manage a radio resource, provide an access service for the user equipment, and further complete forwarding of control information and/or data information between the user equipment and the core network (Core Network, CN). The access network device in this embodiment of this application is a device that provides a wireless communication function for the terminal device, and may also be referred to as a network device. For example, the access network device may include a next generation NodeB (Next Generation Node Basestation, gNB) in a 5G system, an evolved NodeB (Evolved Node B, eNB) in long term evolution (Long Term Evolution, LTE), a radio network controller (Radio Network Controller, RNC), a NodeB (node B, NB), a base station controller (Base Station Controller, BSC), a base transceiver station (base transceiver station, BTS), a home base station (for example, a Home Evolved NodeB, or a Home Node B, an HNB), a baseband unit (Base Band Unit, BBU), a transmission reception point (Rransmitting and Receiving Point, TRP), a transmission point (Transmitting Point, TP), a small cell device (pico), a mobile switching center, a network device in a future network, or the like. It may be understood that a specific type of the access network device is not limited in this embodiment of this application. In systems using different radio access technologies, devices with a function of the access network device may have different names.

An access and mobility management function (Access and Mobility Management Function, AMF) network function 130 is mainly used for mobility management, access management, and the like, and may be used for implementing functions other than a session management function in mobility management entity (Mobility Management Entity, MME) functions, such as a lawful interception function and an access authorization/authentication function. It may be understood that the AMF network function is briefly referred to as an AMF hereinafter.

An authentication server function (Authentication Server Function, AUSF) 140 is used to authenticate services, generate keys, and implement bidirectional authentication on user equipment; and supports a unified authentication framework. In this embodiment of this application, the authentication server function is mainly configured to perform mutual authentication between the UE and a network, and generate a security key for use in a subsequent procedure.

An application function (Application Function, AF) 150 is used to perform application-affected data routing, access a network exposure function, interact with a policy framework to perform policy control, or the like.

The network exposure function (Network Exposure Function, NEF) 160 is used to collect, analyze, and reassemble network capabilities, and open the network capabilities. The AF may access a 5G core network by using the NEF.

A unified data management (Unified Data Management, UDM) network function 170 may be used to process a user equipment identity, access authentication, registration, mobility management, and the like. It may be understood that the UDM network function is briefly referred to as a UDM hereinafter.

A security anchor function (Security Anchor Function, SEAF) network function is used to share a key K_{SEAF} with the UE, and the key is used to derive any other key, for example, a key for control plane protection and a key for radio interface protection. It is then assumed that the SEAF resides in a safe position and that the K_{SEAF} will never leave the SEAF. Therefore, each time the UE is in an idle state and then is activated again, the UE can perform access by using the shared key. This avoids re-authentication. The SEAF may be independently deployed, or may be jointly deployed with the AMF network function 130.

For ease of description, in the embodiments of this application, the access and mobility management function AMF network function 130 is used as an example for description. Further, the AMF network function 130 is briefly referred to as the AMF, and the terminal device 110 is referred to as the UE. In other words, in the embodiments of this application, all AMFs described below may be replaced with the access and mobility management network function, and all UEs may be replaced with the terminal device.

FIG. 2 is a diagram of an AKMA key architecture according to an embodiment of this application. As shown in FIG. 2, UE and a network side complete primary authentication, and generate a security key for use in a subsequent procedure. The primary authentication further involves an AMF/SEAF, an AUSF, and a UDM that are on the network side (in this application, the AMF/SEAF represents the AMF, the SEAF, or the SEAF and the AMF). The security key generated in a primary authentication process includes a K_{AUSF} that is a shared key between the AUSF and the UE. Further, the UE and the AUSF each may further generate an AKMA key K_{AKMA}, so that the UE and an AF perform, based on a K_{AF} generated based on the K_{AKMA}, traffic protection between the UE and the AF. In addition, a KID is a unique key identifier corresponding to the K_{AKMA}.

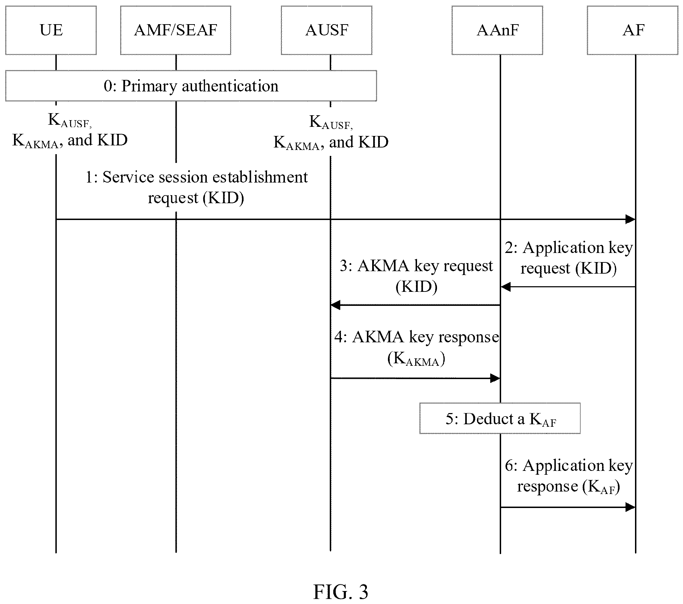

After the UE and the AUSF separately obtain the K_{AKMA} and the KID, refer to FIG. 3. FIG. 3 is a schematic diagram of key negotiation when the UE accesses the AF according to an embodiment of this application. As shown in FIG. 3, the UE initiates a service session request message to the AF. The service session request message includes the KID. After receiving the service session request message, the AF sends an application key request message to an AAnF to obtain the K_{AF}, where the application key request message also includes the received KID. After receiving the application key request, the AAnF checks whether the K_{AF} generated based on the K_{AKMA} corresponding to the KID exists locally. If the K_{AF} exists, the AAnF sends the K_{AF} to the AF. If the K_{AF} does not exist, the AAnF checks whether the K_{AKMA} corresponding to the KID exists locally. If the K_{AKMA} exists, the AAnF generates the K_{AF} based on the K_{AKMA}, and sends the K_{AF} to the AF. If the K_{AKMA} does not exist, the AAnF sends an AKMA key request message to the AUSF, where the AKAM key request message carries the received KID. After receiving the AKMA key request message that carries the KID, the AUSF returns the K_{AKMA} corresponding to the KID to the AAnF. The AAnF obtains the K_{AF} through calculation based on the received K_{AKMA} and sends the K_{AF} to the AF. In this way, the AF and the UE can protect communication based on the K_{AF}.

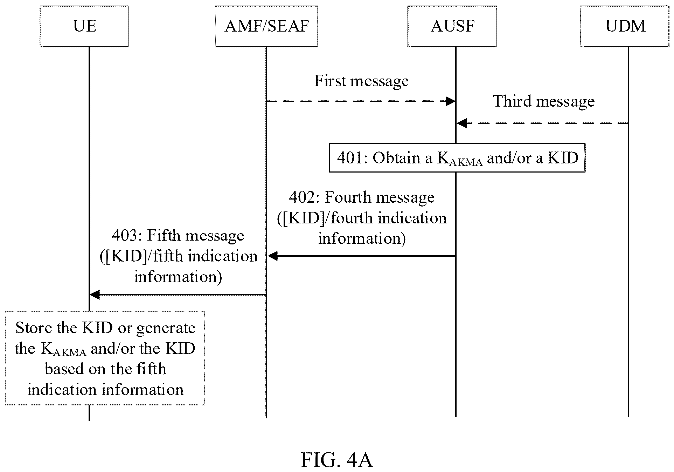

It can be learned from descriptions corresponding to FIG. 2 and FIG. 3 that each of the UE and the AUSF needs to obtain the K_{AKMA} and the KID, and before generating the K_{AF} based on the K_{AKMA} and the KID, it needs to be determined that the K_{AKMA} and the KID are generated in each of the UE and the AUSF. To resolve this problem, refer to FIG. 4A. FIG. 4A is a schematic flowchart of a key obtaining method according to an embodiment of this application. As shown in FIG. 4A, the method includes the following steps.

401: An AUSF obtains an authentication and key management for applications anchor key K_{AKMA} and/or a unique key identifier KID of the K_{AKMA}.

A method for obtaining the K_{AKMA} and/or the KID by the AUSF may be that the AUSF generates the K_{AKMA} and/or the KID after obtaining related parameters for generating the K_{AKMA}, for example, a K_{AUSF}.

Alternatively, the method for obtaining the K_{AKMA} and/or the KID by the AUSF may be obtaining the KID from an AMF/SEAF, and then generating the K_{AKMA} by the AUSF based on the KID.

Alternatively, the method for obtaining the K_{AKMA} and/or the KID by the AUSF may be obtaining second indication information from the AMF/SEAF, where the second indication information is used to indicate the AUSF to generate the K_{AKMA} and/or the KID. The AUSF generates the K_{AKMA} and/or the KID based on the second indication information.

Alternatively, the method for obtaining the K_{AKMA} and/or the KID by the AUSF may be obtaining third indication information or first permission information from a UDM, where the third indication information is used to indicate the AUSF to generate the K_{AKMA} and/or the KID, and the first permission information is used to indicate that UE is capable of using an AKMA service. The AUSF generates the K_{AKMA} and/or the KID based on the third indication information or the first permission information.

In this application, the third indication information and the first permission information express same content, and may be used alternately. It may be considered that the third indication information is the first permission information.

That the AUSF obtains the KID or the second indication information from the AMF/SEAF may be that the AUSF receives a first message sent by the AMF/SEAF, where the first message includes the KID or the second indication information.

That the AUSF obtains the third indication information or the first permission information from the UDM may be that the AUSF receives a third message sent by the UDM, where the third message includes the third indication information or the first permission information.

402: The AUSF sends fourth indication information or the KID to the AMF/SEAF, where the fourth indication information is used to indicate the UE to generate the K_{AKMA} and/or the KID.

That the AUSF sends the fourth indication information or the KID to the AMF/SEAF may be that the AUSF sends a fourth message to the AMF/SEAF, where the fourth message includes the fourth indication information or the KID.

403: After receiving the fourth indication information or the KID, the AMF/SEAF sends the received KID or fifth indication information to the UE, where the fifth indication information is used to indicate the UE to generate the K_{AKMA} and/or the KID.

That the AMF/SEAF sends the KID or the fifth indication information to the UE may be that the AMF/SEAF sends a fifth message to the UE, where the fifth message includes the KID or the fifth indication information.

If the UE receives the KID, the UE stores the KID and generates the K_{AKMA}. If the UE receives the fifth indication information, the UE generates the KID and/or the K_{AKMA}.

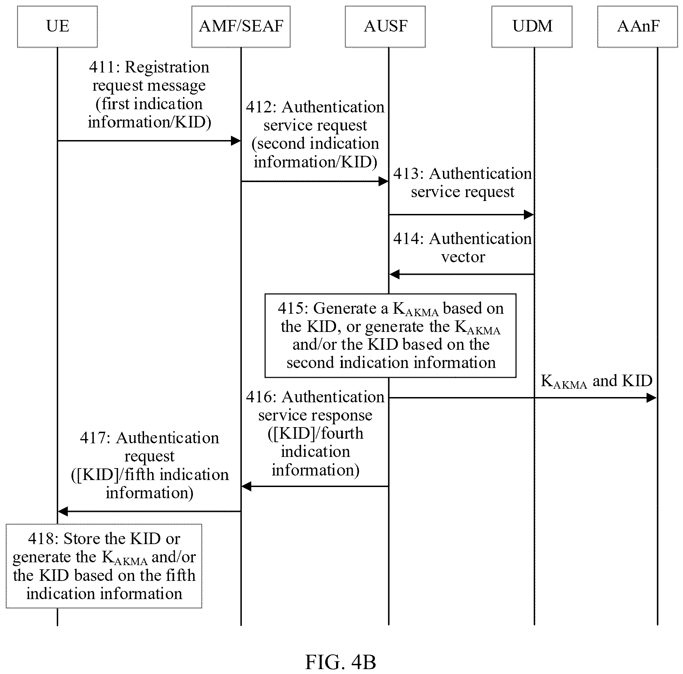

Specifically, refer to FIG. 4B. FIG. 4B is a schematic flowchart of a method for obtaining a KID and/or a K_{AKMA} according to an embodiment of this application. As shown in FIG. 4B, in the method, an AUSF receives a first message from an AMF/SEAF. The first message is an authentication service request message in a primary authentication process, and the first message includes the KID or second indication information. The AUSF obtains the KID and/or the K_{AKMA} based on the first message, the KID in the first message, or first indication information in the first message. The following steps are specifically included.

411: UE sends a registration request message to the AMF/SEAF, where the registration request message includes the KID or the first indication information.

Before sending the KID, the UE generates the KID.

412: The AMF/SEAF sends the first message to the AUSF. In this embodiment, the first message is the authentication service request message, for example, a Nausf_UEAuthentication_Authenticate Request. The first message includes the KID or the second indication information. Correspondingly, the AUSF receives the first message.

If the AMF/SEAF receives the KID, the AMF/SEAF includes the KID in the first message. If the AMF/SEAF receives the first indication information, the AMF/SEAF includes the second indication information in the first message.

The first indication information and the second indication information may be same indication information or different indication information.

413: The AUSF sends an authentication service request message (for example, a Nudm_UEAuthentication_Get Request) used to request an authentication vector of the UE to a UDM. Correspondingly, the UDM receives the authentication service request.

414: The UDM sends the authentication vector to the AUSF. The AUSF receives the authentication vector sent by the UDM.

415: The AUSF generates the K_{AKMA} and/or the KID, or generates the K_{AKMA} based on the KID included in the first message, or generates the K_{AKMA} and/or the KID based on the second indication information included in the first message.

The AUSF may generate the K_{AKMA} and/or the KID at any time point after the AUSF receives the authentication vector sent by the UDM. This is not limited in the present invention.

In some cases, as shown in FIG. 4B, the first message sent by the AMF/SEAF to the AUSF includes the second indication information, and the second indication information is used to indicate any one or more of the following:
that the AUSF generates the K_{AKMA} and/or the KID; that the UE supports an AKMA function; that the UE requests to generate the K_{AKMA} and/or the KID; that the UE is capable of using the AKMA function; and that the UE is capable of using a 3GPP service.

In this application, "3GPP service", "3GPP application", "application", and "service" all represent a same meaning, and may be used alternately.

The registration request message sent by the UE to the AMF/SEAF includes the first indication information, and the first indication information is used to indicate any one or more of the following:
that the AUSF generates the K_{AKMA} and/or the KID; that the UE supports the AKMA function; that the UE requests to generate the K_{AKMA} and/or the KID; that the UE is capable of using the AKMA service; and that the UE is capable of using the 3GPP service.

In other cases, as shown in FIG. 4B, the first message sent by the AMF/SEAF to the AUSF includes the KID, and the KID may be generated by the UE and sent to the AMF/SEAF by using the registration request message. The AMF/SEAF sends the received KID to the AUSF, and the AUSF generates the K_{AKMA} based on the KID.

After receiving the registration request message sent by the UE, the AMF/SEAF requests an authentication service from the AUSF, to be specific, the AMF/SEAF sends the first message to the AUSF. After receiving the first message sent by the AMF/SEAF, the AUSF requests an authentication service from the UDM. After receiving the authentication service request message from the AUSF, the UDM selects an authentication method, generates the authentication vector of the UE, and sends the authentication vector of the UE to the AUSF.

The authentication vector may include a random number (RAND), an authentication token (Authentication Token, AUTN), an intermediate cipher key (CK'), an intermediate integrity key (IK'), and an expected response (Expected Response, XRES). In the authentication vector, the intermediate cipher key CK' is generated based on a cipher key (Encryption key, CK) and an integrity key (Integrity Key, IK), and the intermediate integrity key IK' is also generated based on the cipher key and the integrity key. The AUTN includes an exclusive OR of a sequence number (Sequence Number, SQN) and an anonymity key (Anonymity Key, AK) (namely, an SQN xor AK), an authentication management field (Authentication Management Field, AMF), and message authentication code (Message authentication code, MAC) generated by a long-term key (K), the RAND, the SQN, and the AMF. A part of the authentication vector is any one or more of the following: the RAND, the AUTN, the CK, the IK, the CK', the IK', the XRES, the AK, the AMF, the K, the SQN, and the MAC. The CK, the IK, the AK, and the XRES are generated based on the long-term key (K) and the random number (RAND). The part of the authentication vector may alternatively be a result of any operation performed on any one or more of the RAND, the AUTN, the CK, the IK, the CK', the IK', the XRES, the AK, the AMF, the K, the SQN, and the MAC. The operation includes but is not limited to an exclusive OR operation, a concatenation operation, a hash operation, and the like.

The authentication vector may alternatively include: the RAND, the AUTN, a K_{AUSF}, and a 5G AKA expected response (Authentication and Key Agreement Expected Response, XRES*). In the authentication vector, the AUTN includes the exclusive OR of the SQN and the AK (namely, the SQN xor AK), the AMF, and the MAC generated based on the long-term key (K), the RAND, the SQN, and the AMF. The XRES* is generated based on the CK, the IK, the RAND, the XRES, and a service network name (SN name). The K_{AUSF} is generated based on the CK, the IK, the SQN xor AK, and the SN name. The part of the authentication vector is one or more of the following: the RAND, the AUTN, the K_{AUSF}, the XRES*, the XRES, the CK, the IK, the AK, the AMF, the K, the SQN, the MAC, and the SN name. The part of the authentication vector may alternatively be a result of any operation performed on any one or more of the RAND, the AUTN, the K_{AUSF}, the XRES*, the XRES, the CK, the IK, the AK, the AMF, the K, the SQN, the MAC, and the SN name. The operation includes but is not limited to the exclusive OR operation, the concatenation operation, the hash operation, and the like.

After obtaining the authentication vector, the AUSF obtains the K_{AUSF} from the authentication vector, or generates the K_{AUSF} based on the authentication vector. The AUSF generates the K_{AKMA} and/or the KID. Parameters used to generate the K_{AKMA} and/or the KID include any one or more of the following:
a freshness parameter, including but not limited to the random number (RAND), the SQN, a count (Count), the authentication vector, the part of the authentication vector, and the like;
an identifier of the UE, including but not limited to a subscription permanent identifier (Subscription Permanent Identifier, SUPI), a 5G globally unique temporary identifier (5G Globally Unique Temporary Identifier, 5G-GUTI), a subscription concealed identifier (Subscription Concealed Identifier, SUCI), a generic public subscription identifier (Generic Public Subscription Identifier, GPSI), and the like;
a key shared between the UE and a network side, including but not limited to the K_{AUSF}, the K_{AKMA}, the cipher key CK, the integrity key IK, the anonymity key AK, the long-term key K, and a key generated by any one or more of the K_{AUSF}, the K_{AKMA}, the CK, the IK, the AK, and the K, for example, an SEAF key K_{SEAF}, where the K_{SEAF} is generated based on the K_{AUSF};
public and private keys, including but not limited to a public key of the UE, a private key of the UE, a public key of a home network of the UE, a private key of the home network of the UE, and the like; and
routing information of the AUSF, including but not limited to a public land mobile network identifier (Public Land Mobile Network Identifier, PLMN ID), mobile country code (MCC), a mobile network code (MNC), a routing indicator (Routing Indicator), an AUSF instance identifier (AUSF Instance ID), an AUSF group identifier (AUSF Group ID), and the like.

After generating the K_{AKMA} and/or the KID, the AUSF sends the generated K_{AKMA} and/or the generated KID to an AAnF.

After generating the KID, the AUSF may send the generated KID to the AMF/SEAF (refer to 416 in FIG. 4B), and the AMF/SEAF sends the received KID to the UE (refer to 417 in FIG. 4B). The AUSF may send the KID to the AMF/SEAF by sending a fourth message to the AMF/SEAF, where the fourth message includes the KID. In this embodiment, the fourth message is an authentication service response message, for example, a Nausf_UEAuthentication_Authenticate Response. The AMF/SEAF may send the KID to the UE by sending a fifth message to the UE, where the fifth message includes the KID. In this embodiment, the fifth message is an authentication request message. After receiving the KID, the UE stores the KID and generates the K_{AKMA}.

After generating the KID and/or the K_{AKMA}, the AUSF may send fourth indication information to the AMF/SEAF (refer to 416 in FIG. 4B). The fourth indication information is used to indicate any one or more of the following: used to indicate the AMF/SEAF to send, to the UE, indication information used to indicate the UE to generate the KID and/or the K_{AKMA}; used to indicate the UE to generate the KID and/or the _{KAKMA}; used to notify the UE that the AUSF generates the KID and/or the K_{AKMA}; used to indicate that the UE is capable of using the AKMA function; used to indicate that the network side supports the AKMA function; and used to indicate that the UE is capable of using the service. The AUSF may send the fourth indication information to the AMF/SEAF by sending the fourth message to the AMF/SEAF, where the fourth message includes the fourth indication information. In this embodiment, the fourth message is an authentication service response message, for example, a Nausf_UEAuthentication_Authenticate Response. After receiving the fourth indication information, the AMF/SEAF sends fifth indication information to the UE (refer to 417 in FIG. 4B). The fifth indication information is used to indicate any one or more of the following: used to indicate the UE to generate the KID and/or the K_{AKMA}; used to notify the UE that the AUSF generates the KID and/or the K_{AKMA}; used to indicate that the UE is capable of using the AKMA function; used to indicate that the network side supports the AKMA function; and used to indicate that the UE is capable of using the service. The AMF/SEAF may send the fifth indication information to the UE by using the fifth message sent to the UE, where the fifth message includes the fifth indication information. After receiving the fifth message or the fifth indication information, the UE generates the KID and/or the K_{AKMA}. The fourth indication information and the fifth indication information may be same indication information or different indication information. The fourth indication information and the fifth indication information may indicate same content or different content.

In this application, the UE generates the KID and/or the K_{AKMA} by using same parameters and a same algorithm as those of the AUSF. The UE may generate the KID and/or the K_{AKMA} at any time point after receiving the fifth message or the fifth indication information. This is not limited in this application.

In this embodiment of this application, the UE actively sends the KID or the first indication information to the AMF/SEAF, the AMF/SEAF forwards the KID to the AUSF or sends the second indication information to the AUSF based on the first indication information, and then the AUSF obtains the KID or generates the KID and/or the K_{AKMA} based on the second indication information. In this process, the KID and/or the K_{AKMA} may be generated based on a requirement of the UE. In this way, the KID and/or the K_{AKMA} are generated based on the requirement. This avoids generating an unnecessary KID and/or an unnecessary K_{AKMA} and reduces storage and management of the KID and/or the K_{AKMA}.

In some cases, the AUSF initiates a permission obtaining indication to the UDM, to obtain first permission information of the UE. Then, the AUSF generates the K_{AKMA} and/or the KID corresponding to the UE based on the obtained first permission information.

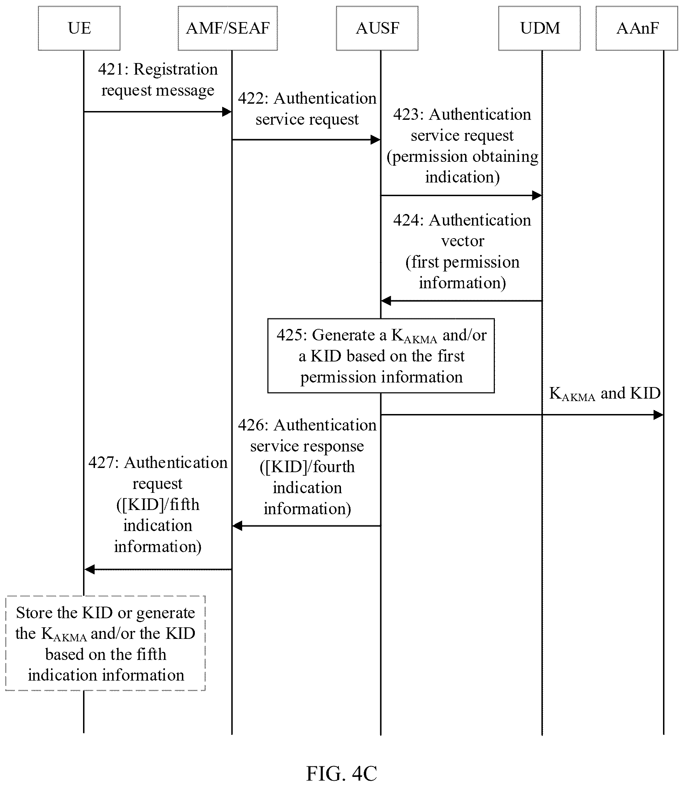

FIG. 4C is a schematic flowchart of another method for obtaining a K_{AKMA} and/or a KID according to an embodiment of this application. In the method, an AUSF receives a first message from an AMF/SEAF. In this embodiment, the first message is an authentication service request message (for example, a Nausf_UEAuthentication_Authenticate Request). After receiving the first message, the AUSF sends a second message to a UDM. In this embodiment of this application, the second message is an authentication service request message (for example, a Nudm_UEAuthentication_Get Request), and is used to request an authentication vector of UE from the UDM. The second message includes a permission obtaining indication, and is used by the AUSF to obtain first permission information from the UDM, to determine whether the UE has first permission. If the UE has the first permission, the KID and/or the K_{AKMA} is generated. The following steps are specifically included.

421: The UE sends a registration request message to the AMF/SEAF. Correspondingly, the AMF/SEAF receives the registration request message sent by the UE.

422: The AMF/SEAF sends the authentication service request (the first message) to the AUSF based on the registration request information of the UE, where the first message carries an identifier of the UE, an SUCI, or an SUPI. Correspondingly, the AUSF receives the first message.

423: The AUSF sends the second message to the UDM. In this embodiment, the second message is the authentication service request message. The AUSF includes, in the second message, a permission request indication, and the permission request indication is used to indicate any one or more of the following: used to indicate to request to generate the KID and/or the K_{AKMA}; used to indicate to request to use an AKMA service; used to indicate to request to use a 3GPP service; used to indicate that the UE supports the AKMA function; used to indicate that the AUSF supports the AKMA function; used to indicate to request to query whether the UE has the first permission. The first permission is any one or more of the following: the UE supports the AKMA function; the UE is capable of using the 3GPP service; the UE is capable of using the AKMA function; and the KID and/or the K_{AKMA} may be generated for the UE. Correspondingly, the UDM receives the second message including the permission request indication. The UDM obtains the first permission information based on the permission request indication.

424: The UDM sends a second response message to the AUSF.

In this embodiment, the second response message is an authentication service response message. The second response message includes the first permission information, and the first permission information is used to indicate any one or more of the following: that the UE is capable of using AKMA; that the KID and/or the K_{AKMA} is generated for the UE; that the UE is capable of using the 3GPP service; and that the UE supports AKMA.

425: The AUSF generates the K_{AKMA} and/or the KID based on the first permission information or the second response message.

Parameters used to generate the K_{AKMA} and/or the KID is described in FIG. 4B, and details are not described herein again.

The AUSF may generate the K_{AKMA} and/or the KID at any time after receiving the first permission information or the second response message. This is not limited in this application.

After receiving the permission request indication, the UDM returns the first permission information to the AUSF based on related data of the UE.

In some cases, the AUSF may send the permission request indication to the UDM based on any one or more of the following facts: a fact that the AUSF receives the first message sent by the AMF/SEAF; and a fact that the AUSF receives the first message sent by the AMF/SEAF, where the first message includes second indication information or the KID. In this case, when the AMF/SEAF sends the first message to the AUSF, the first message includes the second indication information or the KID. That the AMF/SEAF sends the second indication information, the KID, the first message including the second indication information, or the first message including the KID to the AUSF may be based on a fact that the AMF/SEAF receives first indication information or the KID sent by the UE. In this case, the UE sends the registration request message to the AMF/SEAF, where the registration request message carries the first indication information or the KID. For descriptions of the first message, the second indication information, and the first indication information, refer to descriptions in FIG. 4B. Details are not described herein again.

After generating the K_{AKMA} and/or the KID, the AUSF sends the generated K_{AKMA} and/or the generated KID to an AAnF.

426: Refer to the descriptions of 416 in FIG. 4B, and details are not described herein again.

427: Refer to the descriptions of 417 in FIG. 4B, and details are not described herein again.

In this embodiment of this application, the AUSF actively sends the permission obtaining indication to the UDM, to obtain the first permission information, where the first permission information is used to indicate that the UE is capable of using the authentication and key management for applications AKMA service. Then, the AUSF generates the K_{AKMA} and/or the KID based on the obtained first permission information. This can ensure that generation of the K_{AKMA} and/or the KID is authorized and avoid generating an unauthorized K_{AKMA} and/or an unauthorized KID.

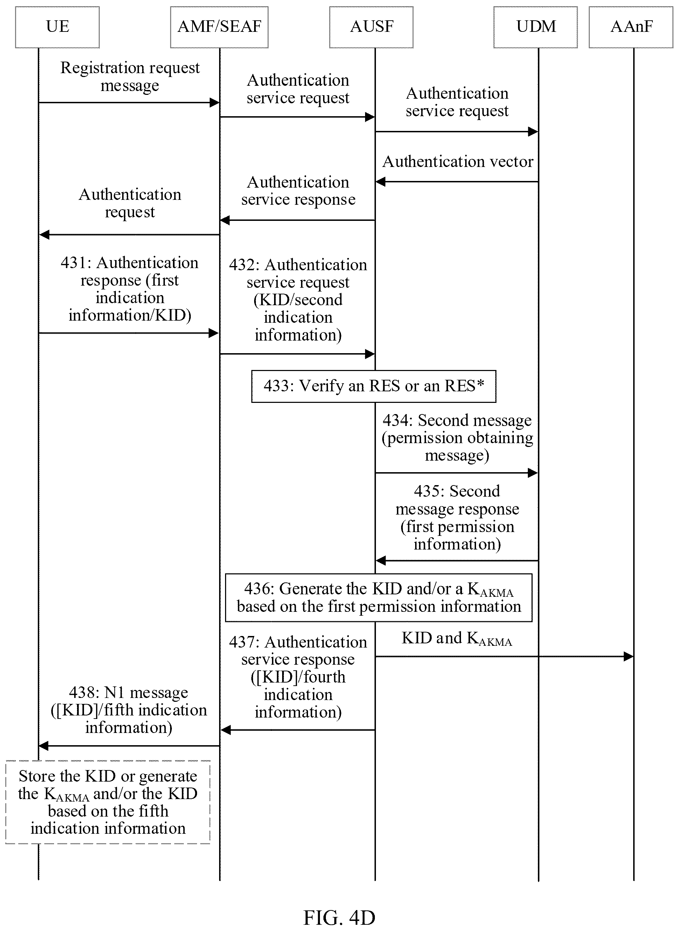

In an optional embodiment, refer to FIG. 4D. FIG. 4D is a schematic flowchart of another method for obtaining a KID and/or a K_{AKMA} according to an embodiment of this application. In the method, an AUSF receives a first message from an AMF/SEAF. The first message includes a KID or second indication information. In this embodiment, the first message is an authentication service request (for example, a Nausf_UEAuthentication_Authenticate Request), and the authentication service request includes a response RES or a 5G AKA response RES*. After receiving the first message, the AUSF sends a second message to a UDM. In this embodiment, the second message is an authentication result confirmation request message (for example, a Nudm_UEAuthentication_ResultConfirmation Request). The second message may include a permission obtaining indication, and is used by the AUSF to obtain first permission information from the UDM and generate the KID and/or the K_{AKMA} based on the first permission information. As shown in FIG. 4D, the method includes the following steps.

431: UE sends an authentication response message to the AMF/SEAF, where the authentication response message carries the response RES or RES*, and the authentication response message includes the KID or first indication information. Correspondingly, the AMF/SEAF receives the authentication response message that is sent by the UE and that includes the KID or the first indication information. The UE generates the KID before sending the KID.

432: The AMF/SEAF sends the first message to the AUSF. The first message includes the received authentication response RES or RES*. If the AMF/SEAF receives the KID from the UE, the AMF/SEAF includes the KID in the first message. If the AMF/SEAF receives the first indication information from the UE, the AMF/SEAF includes the second indication information in the first message. In this embodiment, the first message is the authentication service request message.

Correspondingly, the AUSF receives the first message that is sent by the AMF/SEAF and that includes the KID or the second indication information.

433: The AUSF verifies the received RES or RES*.

434: After verification succeeds, the AUSF generates the K_{AKMA} and/or the KID. Alternatively, after the verification succeeds, the AUSF generates the K_{AKMA} and/or the KID based on the second indication information or the KID. Parameters used by the AUSF to generate the K_{AKMA} and/or the KID are described in FIG. 4B, and details are not described herein again.

The AUSF may generate the K_{AKMA} and/or the KID at any time after the AUSF successfully verifies the RES or RES*. This is not limited in this application.

When the UE sends, to the AMF/SEAF, the authentication response message that carries the response RES or RES*, the message includes the first indication information or the KID. The first indication information is used to indicate any one or more of the following: that the AUSF generates the K_{AKMA} and/or the KID; that the UE supports an AKMA function; that the UE requests to generate the K_{AKMA} and/or the KID; that the UE is capable of using the AKMA service; and that the UE is capable of using a 3GPP service.

After receiving the authentication response message sent by the UE, the AMF/SEAF sends the first message to the AUSF. The first message includes the KID or the second indication information. The second indication information is used to indicate any one or more of the following: that the AUSF generates the K_{AKMA} and/or the KID; that the UE supports the AKMA function; that the UE requests to generate the K_{AKMA} and/or the KID; that the UE is capable of using the AKMA service; and that the UE is capable of using the 3GPP service.

The first indication information and the second indication information may be same indication information or different indication information.

After verification on the response RES or RES* succeeds, the AUSF generates the K_{AKMA} and/or the KID, or generates the K_{AKMA} based on the received KID, or generates the K_{AKMA} and/or the KID based on the received second indication information or the received first message.

Alternatively, as shown in FIG. 4D, the method may further include the following steps.

434: After verifying the RES or RES*, the AUSF sends the second message to the UDM, where the second message includes the permission obtaining indication. The second message may be the authentication result confirmation request message. Correspondingly, the UDM receives the second message including the permission obtaining indication. The permission obtaining indication is used to indicate any one or more of the following: to request to generate the KID and/or the K_{AKMA}; to request to use the AKMA service; to request to use the 3GPP service; that the UE supports the AKMA function; that the AUSF supports the AKMA function; and to request to query whether the UE has first permission. The first permission is any one or more of the following: the UE supports the AKMA function; the UE is capable of using the 3GPP service; the UE is capable of using the AKMA function; and the KID and/or the K_{AKMA} may be generated for the UE. Correspondingly, the UDM receives the second message including the permission obtaining indication.

435: The UDM sends the first permission information to the AUSF based on the permission obtaining indication, where the first permission information is used to indicate any one or more of the following: that UE is capable of using AKMA; that the KID and/or the K_{AKMA} may be generated for the UE; that the UE has subscribed to the 3GPP service; and that the UE supports AKMA. Correspondingly, the AUSF receives the first permission information from the UDM. The UDM sends the first permission information to the AUSF, and a second message response sent to the AUSF may include the first permission information. The second message response may be an authentication result confirmation response message (for example, a Nudm_UEAuthentication_ResultConfirmation Response).

436: The AUSF generates the K_{AKMA} and/or the KID based on the received first permission information. A method and parameters used by the AUSF to generate the K_{AKMA} and/or the KID are described in FIG. 4B, and details are not described herein again.

The AUSF may generate the K_{AKMA} and/or the KID at any time after the AUSF obtains the first permission information. This is not limited in this application.

After generating the K_{AKMA} and/or the KID, the AUSF sends the generated K_{AKMA} and/or the generated KID to an AAnF.

After generating the KID, the AUSF may send the generated KID to the AMF/SEAF (refer to FIG. 437 in FIG. 4D), and the AMF/SEAF sends the received KID to the UE (refer to FIG. 438 in FIG. 4D). The AUSF may send the KID to the AMF/SEAF by sending a fourth message to the AMF/SEAF, where the fourth message includes the KID. In this embodiment, the fourth message is an authentication service response message, for example, a Nausf_UEAuthentication_Authenticate Response. The AMF/SEAF may send the KID to the UE by sending a fifth message to the UE, where the fifth message includes the KID. In this embodiment, the fifth message is an N1 message (for example, an authentication result message or a non-access stratum security mode command message). After receiving the KID, the UE stores the KID and generates the K_{AKMA}.

After generating the KID and/or the K_{AKMA}, the AUSF may send fourth indication information to the AMF/SEAF (refer to FIG. 437 in FIG. 4D). The fourth indication information is used to indicate any one or more of the following: used to indicate the AMF/SEAF to send, to the UE, indication information used to indicate the UE to generate the KID and/or the K_{AKMA}; used to indicate the UE to generate the KID and/or the _{KAKMA}; used to notify the UE that the AUSF generates the KID and/or the K_{AKMA}; used to indicate that the UE is capable of using the AKMA function; used to indicate that a network side supports the AKMA function; and used to indicate that the UE is capable of using the service. The AUSF may send the fourth indication information to the AMF/SEAF by sending the fourth message to the AMF/SEAF, where the fourth message includes the fourth indication information. In this embodiment, the fourth message is the authentication service response message, for example, the Nausf_UEAuthentication_Authenticate Response. After receiving the fourth indication information, the AMF/SEAF sends fifth indication information to the UE (refer to FIG. 438 in FIG. 4D). The fifth indication information is used to indicate any one or more of the following: used to indicate the UE to generate the KID and/or the K_{AKMA}; used to notify the UE that the AUSF generates the KID and/or the K_{AKMA}; used to indicate that the UE is capable of using the AKMA function; used to indicate that the network side supports the AKMA function; and used to indicate that the UE is capable of using the service. The AMF/SEAF may send the fifth indication information to the UE by using the fifth message sent to the UE, where the fifth message includes the fifth indication information. In this embodiment, the fifth message is the N1 message (for example, the authentication result message or the non-access stratum security mode command message). After receiving the fifth indication information or the fifth message, the UE generates the KID and/or the K_{AKMA}. The fourth indication information and the fifth indication information may be same indication information or different indication information. The fourth indication information and the fifth indication information may indicate same content.

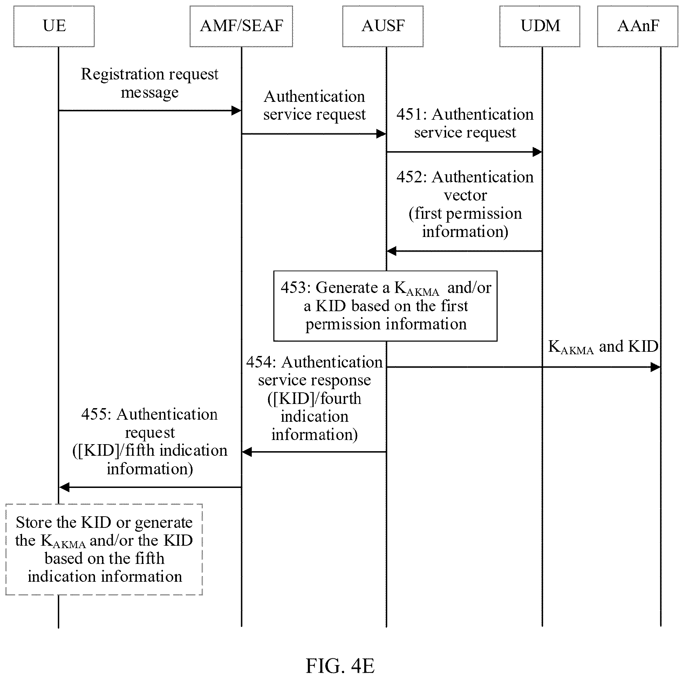

In some cases, the UDM may alternatively send a third message to the AUSF, to trigger the AUSF to generate the KID and/or the K_{AKMA}. FIG. 4E is a schematic flowchart of another method for obtaining a KID and/or a K_{AKMA} according to an embodiment of this application. As shown in FIG. 4E, the method includes the following steps.

451: An AUSF sends an authentication service request message, for example, a Nudm_UEAuthentication_Get Request, to a UDM based on a received authentication service request, where the authentication service request is used to request to obtain an authentication vector. Correspondingly, the UDM receives the authentication service request message.

452: The UDM sends a third message to the AUSF. The UDM includes first permission information in the third message, and the first permission information is used to indicate any one or more of the following: that UE is capable of using AKMA; that the KID and/or the K_{AKMA} is generated for the UE; that the UE is capable of using a 3GPP service; and that the UE supports AKMA. In this embodiment, the third message is an authentication service response message, for example, a Nudm_UEAuthentication_UEAuthentication_Get Response.

Correspondingly, the AUSF receives the third message that is sent by the UDM and that includes the first permission information.

453: The AUSF generates the K_{AKMA} and/or the KID based on the first permission information or the third message. A method and parameters used by the AUSF to generate the K_{AKMA} and/or the KID are described in FIG. 4B, and details are not described herein again. The AUSF may generate the K_{AKMA} and/or the KID at any time point after receiving the third message or the first permission information. This is not limited in this application.

After generating the K_{AKMA} and/or the KID, the AUSF sends the generated K_{AKMA} and/or the generated KID to an AAnF.

454: Refer to the descriptions of 416 in FIG. 4B, and details are not described herein.

455: Refer to the descriptions of 417 in FIG. 4B, and details are not described herein.

In this embodiment of this application, the UDM actively obtains the first permission information of the UE, and sends the first permission information to the AUSF, so that the AUSF generates the K_{AKMA} and/or the KID based on the first permission information. This ensures that the AUSF generates the K_{AKMA} and/or the KID based on authorization and avoids generating an unauthorized K_{AKMA} and/or an unauthorized KID.

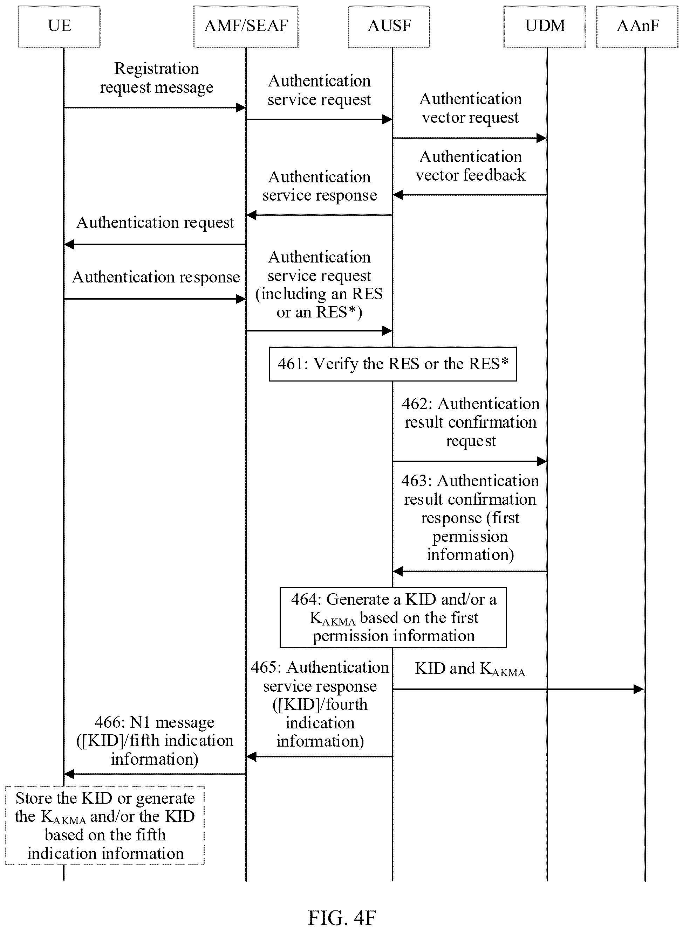

Alternatively, in some cases, the UDM also sends the first permission information to the AUSF, to trigger the AUSF to generate the KID and/or the K_{AKMA}. The third information sent by the UDM to the AUSF includes the first permission information, but the third information is authentication result confirmation response information. For details, refer to FIG. 4F. FIG. 4F is a schematic flowchart of another method for obtaining a KID and/or a K_{AKMA} according to an embodiment of this application. As shown in FIG. 4F, the method includes the following steps.

461: An AMF/SEAF sends an authentication service request message carrying RES or RES* to an AUSF. The AUSF receives the authentication service request message sent by the AMF/SEAF, and the AUSF verifies the RES or RES*.

462: The AUSF sends an authentication result confirmation request message, for example, a Nudm_UEAuthentication_ResultConfirmation Request, to a UDM, to notify the UDM of an authentication result of UE.

463: The UDM sends a third message to the AUSF, where the third message includes first permission information. The first permission information is used to indicate any one or more of the following: that the UE is capable of using AKMA; that the KID and/or the K_{AKMA} is generated for the UE; that the UE is capable of using a 3GPP service; and that the UE supports the AKMA function. In this embodiment, the third message is an authentication result confirmation response message, for example, a Nudm_UEAuthentication_ResultConfirmation Response. Correspondingly, the AUSF receives the third message including the first permission information.

464: The AUSF generates the K_{AKMA} and/or the KID based on the first permission information or the third message. A method and parameters used by the AUSF to generate the K_{AKMA} and/or the KID are described in FIG. 4B, and details are not described herein again. The AUSF may generate the K_{AKMA} and/or the KID at any time point after receiving the third message or the first permission information. This is not limited in this application.

After generating the K_{AKMA} and/or the KID, the AUSF sends the generated K_{AKMA} and/or the generated KID to an AAnF.

465: Refer to the descriptions of 437 in FIG. 4D, and details are not described herein.

466: Refer to the descriptions of 438 in FIG. 4D, and details are not described herein.

In the embodiments in FIG. 4B to FIG. 4F, the AMF/SEAF sends the KID or the second indication information to the AUSF by sending the first message to the AUSF, where the first message includes the second indication information. The first message may be the authentication service request message. It should be noted that a type of the first message is not limited to the content mentioned in the foregoing embodiments. The first message may alternatively be any other existing communication message between the AMF/SEAF and the AUSF, or may be a newly established communication message between the AMF/SEAF and the AUSF.

In the embodiments in FIG. 4B to FIG. 4F, the AUSF sends the permission obtaining indication to the UDM by sending the second message, where the second message includes the permission obtaining indication. The second message may be the authentication service request message, or may be the authentication result confirmation request message. It should be noted that a type of the second message is not limited to the content mentioned in the foregoing embodiments. The second message may alternatively be any other existing communication message between the AUSF and the UDM, or may be a newly established communication message between the AUSF and the UDM.

In the embodiments in FIG. 4B to FIG. 4F, the UDM sends the first permission information to the AUSF by sending the third message to the UDM, where the third message includes the first permission information. The third message may be the authentication service response message, or may be the authentication result confirmation response message. It should be noted that a type of the third message is not limited to the content mentioned in the foregoing embodiments. The third message may alternatively be any other existing communication message between the UDM and the AUSF, or may be a newly established communication message between the AUSF and the UDM.

In the embodiments in FIG. 4B to FIG. 4F, after obtaining the K_{AKMA} and the KID, the AUSF sends the fourth message to the AMF/SEAF, where the fourth message includes the KID or the fourth indication information. The AMF/SEAF sends the fifth message to the UE, where the fifth message includes the KID or the fifth indication information. The fourth message may be the authentication service response message sent by the AUSF to the AMF/SEAF shown in FIG. 4B and FIG. 4C, and the fifth message may be the authentication request message sent by the AMF/SEAF to the UE. Alternatively, the fourth message may be the authentication service response message shown in FIG. 4D, and the fifth message may be the N1 message, for example, the authentication result message or the non-access stratum security mode command message. It should be noted that a type of the fourth message is not limited to the content mentioned in the foregoing embodiments. The fourth message may alternatively be another existing communication message between the AMF/SEAF and the AUSF, or may be a newly established communication message between the AMF/SEAF and the AUSF. A type of the fifth message is not limited to the content mentioned in the foregoing embodiments. The fifth message may alternatively be any other existing N1 message between the AMF/SEAF and the UE, or may be a newly established N1 message between the AMF/SEAF and the UE.

It can be learned that, in the embodiments of this application, the AUSF or the UE obtains the AKMA key K_{AKMA} and/or the KID, where the AKMA key is used to generate a K_{AF}. The present invention discloses the method and the parameters used by the AUSF or the UE to obtain the AKMA key K_{AKMA} and/or the KID, and a trigger condition and an occasion for the AUSF or the UE to obtain the K_{AKMA} and/or the KID.

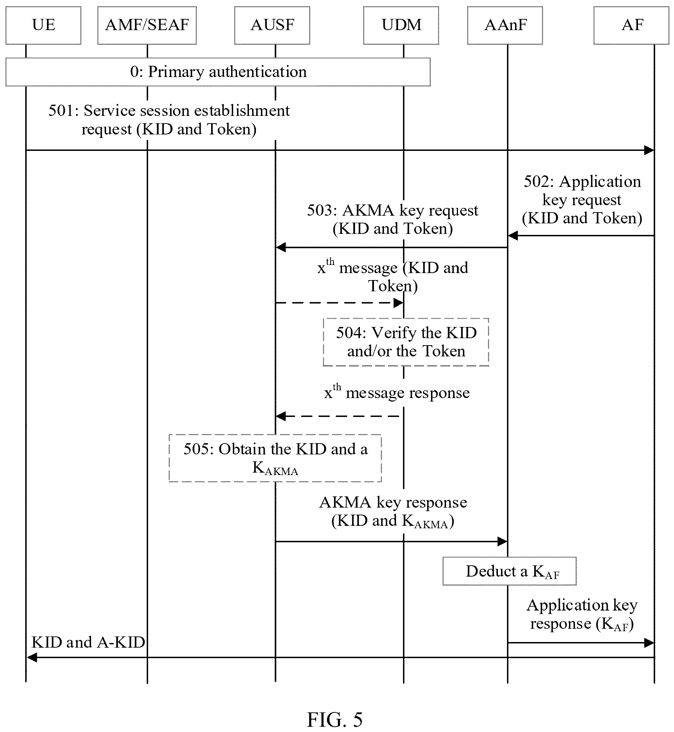

The UE initiates a service session request to an AF to establish communication between the two parties. In this process, identity authentication may further be performed on the UE. Specifically, refer to FIG. 5. FIG. 5 is a schematic flowchart of a UE identity authentication method according to an embodiment of this application. As shown in FIG. 5, the method includes the following steps.

501: UE sends a service session establishment request to an AF, where the service session establishment request includes a KID and a Token.

In this embodiment of this application, the service session request includes the Token Token. The Token is used to verify an identity of the UE or an identity of an application user. If the UE sends the Token to the AF, the UE obtains or generates the Token before sending the Token.

In a possible manner, the service session request may further include an application user identifier (User Identifier, User-ID) and/or a UE identifier (UE Identifier, UE-ID). The User-ID is an identity used by the application user to access the AF, and is used by the AF to identify the application user. The UE-ID is an identity used when the UE accesses a network, and is used by a network side (for example, an AUSF, a UDM, or an AAnF) to identify the UE. In this application, the User-ID includes but is not limited to a GPSI, a user name, and the like. The UE-ID includes but is not limited to an SUPI, a 5G-GUTI, an SUCI, a GPSI, and the like of the UE.

In a possible manner, the service session request includes the Token, and the Token includes the User-ID and/or the UE-ID.

502: The AF sends an application key request to the AAnF to obtain a K_{AF}, where the key request includes the KID and the Token.

If the AF receives the Token from the UE, the AF performs any one of the following operations:

The AF verifies the received Token, and after verification succeeds, the AF sends the application key request to the AAnF to obtain the K_{AF}, where the key request includes the KID.

The AF sends the application key request to the AAnF to obtain the K_{AF}, where the key request includes the KID and the received Token.

In a possible manner, the AF identifies, based on the received User-ID, the application user requesting a service.

In a possible manner, the AF may alternatively include the received User-ID and/or the received UE-ID in the application key request.

503: The AAnF sends an AKMA key request to the AUSF to obtain a K_{AKAM}, where the AKMA key request includes the KID and the Token.

Before the AAnF sends the AKMA key request to the AUSF, the AAnF needs to select the AUSF based on AUSF routing information included in the received KID.

If the AAnF receives the Token from the AF, the AAnF further performs any one of the following operations:

The AAnF verifies the received Token, and after verification succeeds, the AF sends an application key request to the AUSF to obtain the K_{AF}, where the key request includes the KID.

The AF sends the application key request to the AAnF to obtain the K_{AF}, where the key request includes the KID and the received Token.

If the AAnF receives the User-ID and/or the UE-ID, the AAnF includes the received User-ID and/or the received UE-ID in the AKMA key request.

504: If the AUSF receives the Token, the AUSF verifies the received Token, or the AUSF sends the Token to the UDM, and the UDM verifies the received Token.

The AUSF verifies the received Token, and may verify the Token by using key information shared by the AUSF and the UE. The key information shared by the AUSF and the UE may be any one or more of the following: a K_{AUSF}, the K_{AKMA}, a cipher key CK, an integrity key IK, a long-term key K, and a key generated based on the cipher key CK and/or the integrity key IK, an authentication vector, a part of the authentication vector, and the like. Before verifying the received Token, the AUSF may need to identify the UE or the application user who initiates the request. The AUSF may identify the UE or the application user in any of the following manners:

The AUSF identifies the UE based on the received KID, and obtains the UE-ID and/or the User-ID of the UE.

The AUSF obtains the UE-ID or the User-ID included in the Token.

The AUSF may send the obtained UE-ID and/or the obtained User-ID to the UDM.

That the AUSF sends the Token to the UDM may be that the AUSF sends an x^{th} message to the UDM, where the x^{th} message includes the Token. The UDM receives the x^{th} message including the Token, verifies the Token, and returns a verification result of the Token to the AUSF. The UDM may send the verification result of the Token to the AUSF by sending an x^{th} response message to the AUSF by the UDM, where the x^{th} response message includes the verification result. Before verifying the received Token, the UDM may need to identify the UE or the application user who initiates the request. The UDM may identify the UE or the application user in any of the following manners:

The UDM identifies the UE or the application user based on the UE-ID or the User-ID included in the Token.

The UDM identifies the UE or the application user based on the UE-ID or the User-ID received from the AUSF.

The UDM may verify the Token by using key information shared by the UDM and the UE. The key information shared by the UDM and the UE may be any one or more of the following: the K_{AUSF}, the K_{AKMA}, the cipher key CK, the integrity key IK, the long-term key K, the key generated based on the cipher key CK and/or the integrity key IK, the authentication vector, the part of the authentication vector, and the like. The UDM may alternatively verify the Token by using a public key of the UE, a private key of the UE, a public key of a home network, a private key of the home network, or the like.

The UDM may send the User-ID and/or the UE-ID of the UE to the AUSF.

505: The AUSF obtains or generates the corresponding K_{AKMA} based on the received KID. Alternatively, if the AUSF successfully verifies the Token, the AUSF obtains or generates the corresponding K_{AKMA} based on the received KID. Alternatively, if the AUSF receives a verification result that is sent by the UDM and that indicates that verification on the Token succeeds, the AUSF obtains or generates the corresponding K_{AKMA} based on the received KID. The AUSF includes the K_{AKMA} in an AKMA key response and sends the AKMA key response to the AAnF.

When the AUSF sends the K_{AKMA} to the AAnF, the AUSF may further send the User-ID or the UE-ID to the AAnF, in other words, the AUSF includes the UE-ID or the User-ID in the AKMA key response.

The AAnF sends the received UE-ID or the received User-ID to the AF.

In this process, identity authentication is performed on the UE or the application user by using the AF, the AAnF, the AUSF, or the UDM, to determine the identity of the UE. The AUSF sends the K_{AKAM} to the AAnF, so that the AAnF generates the application key K_{AF} corresponding to the AF based on the K_{AKAM}, where K_{AF} is used for traffic protection between the UE and the AF.

In this embodiment, the Token is used to authenticate the UE or the application user. In some cases, another authentication manner may alternatively be used, for example, the KID, a digest (digest), or message authentication code (Message Authentication Code, MAC). As shown in FIG. 5, the KID is used as an example.

After receiving the KID sent by the AAnF, the AUSF verifies the KID, or sends the KID to the UDM. After receiving the KID, the UDM verifies the KID and returns a verification result to the AUSF. If the AUSF successfully verifies the KID, or the AUSF receives a verification result that is sent by the UDM and that indicates that verification on the KID succeeds, the AUSF sends the K_{AKMA} to the AAnF.

The AUSF may verify the Token by using the key information shared by the AUSF and the UE. The key information shared by the AUSF and the UE may be any one or more of the following: the K_{AUSF}, the K_{AKMA}, the cipher key CK, the integrity key IK, the long-term key K, the key generated based on the cipher key CK and/or the integrity key IK, the authentication vector, the part of the authentication vector, and the like.

The UDM may verify the KID by using the key information shared by the UDM and the UE. The key information shared by the UDM and the UE may be any one or more of the following: the K_{AUSF}, the K_{AKMA}, the cipher key CK, the integrity key IK, the long-term key K, the key generated based on the cipher key CK and/or the integrity key IK, the authentication vector, the part of the authentication vector, and the like. The UDM may alternatively verify the KID by using the public key of the UE, the private key of the UE, the public key of the home network, the private key of the home network, or the like.

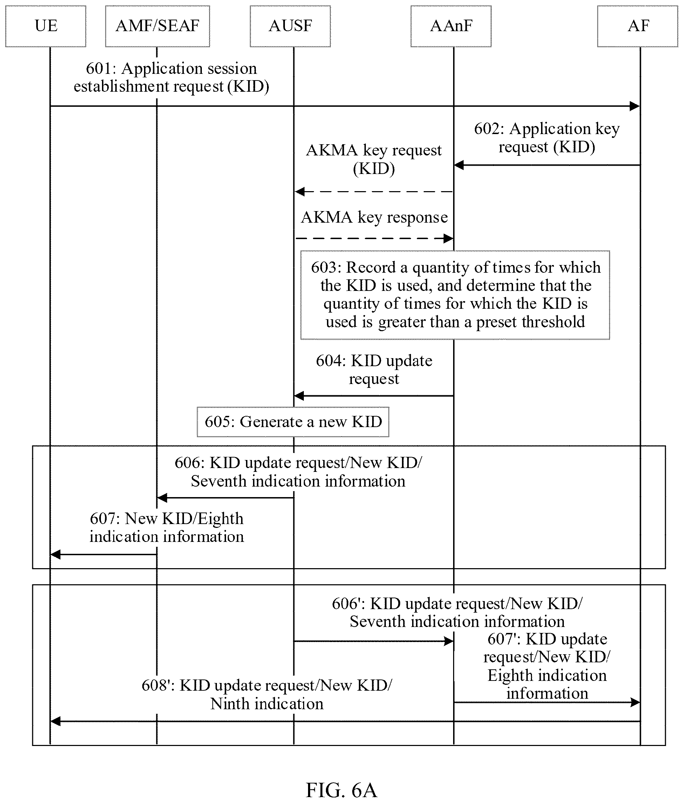

In addition, the KID in the UE and the AUSF may be updated to prevent an attacker from tracking the UE by tracking the KID. FIG. 6A is a schematic flowchart of a method for updating a KID and/or a K_{AKMA} according to an embodiment of this application. As shown in FIG. 6A, the method includes the following steps.

601: UE sends a service session establishment request to an AF, where the service session establishment request includes the KID.

602: The AF sends an application key request to an AAnF to obtain a K_{AF}, where the key request includes the KID. The AAnF obtains the corresponding K_{AF} based on the received KID. That the AAnF obtains the corresponding K_{AF} may be that the AAnF locally obtains the K_{AF} based on the KID, or that the AAnF generates the K_{AF} based on the K_{AKMA} corresponding to the KID, or that the AAnF sends an AKMA key request carrying the received KID to an AUSF, receives the K_{AKMA} returned by the AUSF, and generates the K_{AF} based on the received K_{AKMA}.

603: The AAnF records a quantity of times for which the KID is used.

The AAnF records the quantity of times for which the KID is used. A counter may be generated by the AAnF, and an initial value of the counter is 0. When the KID is used once, the counter is incremented by one. The counter may be incremented by one based on the application key request received by the AAnF. Alternatively, the counter may be incremented by one based on the AKMA key request sent to the AUSF by the AAnF. Alternatively, the counter may be incremented by one based on the K_{AKMA} or an AKMA key response obtained from the AUSF by the AAnF. Alternatively, the counter may be incremented by one based on the received KID or a received message including the KID.

604: When the AAnF determines that the quantity of times for which the KID is used (or a value of the counter) is greater than a preset threshold, the AAnF sends a KID and/or K_{AKMA} update request to the AUSF, to notify the AUSF to update the KID and/or the K_{AKMA}, and generate a new KID and/or a new K_{AKMA}. The AAnF may further send a UE-ID or a User-ID to the AUSF at the same time. The AUSF determines, based on the received UE-ID or the received User-ID, the UE that needs to update the KID and/or the K_{AKMA}.

605: After receiving the KID and/or K_{AKMA} update request, the AUSF may perform any one or more of the following operations:

The AUSF updates the KID and/or the K_{AKMA}, and generates the new KID and/or the new K_{AKMA}.

The AUSF sends a KID and/or K_{AKMA} update request, the updated KID, or seventh indication information to an AMF/SEAF. The seventh indication information is used to indicate any one or more of the following: used to indicate the UE to update the KID and/or the K_{AKMA}; used to indicate the UE to generate the new KID and/or the K_{AKMA}; used to indicate the AMF/SEAF to initiate primary authentication; and used to indicate the AMF/SEAF to allocate a new 5G-GUTI to the UE. The AUSF may further send the UE-ID to the AMF/SEAF at the same time, namely, 606 in FIG. 6A.

The AUSF requests an authentication vector from a UDM. After receiving the authentication vector from the UDM, the AUSF sends an EAP-Request/AKA'-Challenge message to the AMF/SEAF, or sends a 5G service environment authentication vector to the AMF/SEAF. The 5G service environment authentication vector includes an RAND, an AUTN, and an HXRES*.

After generating the new KID and/or the new K_{AKMA}, the AUSF sends the new KID and/or the new K_{AKMA} to the AAnF.

Alternatively, after the AUSF completes updating the KID and/or the K_{AKMA}, the UE also needs to update the KID and/or the K_{AKMA}. Refer to FIG. 6A. A process in which the UE updates the KID may include the following steps.

606: The AUSF sends the KID and/or K_{AKMA} update request, the newly generated KID, or the seventh indication information to the AMF/SEAF. The seventh indication information is used to indicate any one or more of the following: to update the KID and/or the K_{AKMA}; to generate the new KID and/or the new K_{AKMA}; that the AMF/SEAF initiates primary authentication; and that the AMF/SEAF allocates the new 5G-GUTI to the UE. The AUSF may further send the UE-ID to the AMF/SEAF at the same time, so that the AMF/SEAF identifies the UE that needs to perform update.

607: The AMF/SEAF determines, based on the received UE-ID, the UE that needs to update the KID and/or the K_{AKMA}. The AMF/SEAF may perform any one or more of the following operations based on the received KID and/or K_{AKMA} update request, the seventh indication information, or the KID:
the AMF/SEAF sends a KID and/or K_{AKMA} update request to the UE; the AMF/SEAF sends eighth indication information to the UE; the AMF/SEAF sends the KID to the UE; the AMF/SEAF initiates a primary authentication procedure; and the AMF/SEAF allocates the new 5G-GUTI to the UE and sends the new 5G-GUTI to the UE.

The eighth indication information is used to indicate any one or more of the following: to update the KID and/or the K_{AKMA}; to generate the new KID and/or the K_{AKMA}; and that a network side (for example, the AUSF) has updated the KID and/or the K_{AKMA}.

If the UE receives the KID, the UE stores the KID and generates the new K_{AKMA}. If the UE receives the KID and/or K_{AKMA} update request or the eighth indication information, the UE generates the new KID and/or the new KAKMA.

In this application, when updating the KID, the UE or the AUSF may generate the new KID based on the current KID. Other parameters may be alternatively used to generate the new KID. This is not limited in this application. The UE and the AUSF use a same method and same parameters to update the KID.

Alternatively, in some possible cases, KID update performed by the UE may be triggered by the AF. Refer to FIG. 6A. The process includes the following steps.

606': The AUSF sends a KID and/or K_{AKMA} update request, the newly generated KID and/or K_{AKMA}, or the seventh indication information to the AAnF. The AUSF may further send the UE-ID or the User-ID to the AAnF at the same time. The AAnF determines, based on the received UE-ID or the received User-ID, the UE or an application user that needs to update the KID and/or the K_{AKMA}.

607': The AAnF sends a KID and/or K_{AKMA} update request, the received KID, or the eighth indication information to the AF. The AAnF may further send the UE-ID or the User-ID to the AF at the same time. The AF determines, based on the received UE-ID or the received User-ID, the UE that needs to update the KID and/or the K_{AKMA}. The eighth indication information is used to indicate any one or more of the following: to update the KID and/or the K_{AKMA}; to generate the new KID and/or the new K_{AKMA}; and that the network side (for example, the AUSF) has updated the KID and/or the K_{AKMA}.

608': The AF sends a KID and/or K_{AKMA} update request, the received KID, or ninth indication information to the UE based on the received KID and/or K_{AKMA} update request, the KID, or the eighth indication information. The ninth indication information is used to indicate any one or more of the following: to update the KID and/or the K_{AKMA}; to generate the new KID and/or the new K_{AKMA}; and that the network side (for example, the AUSF) has updated the KID and/or the K_{AKMA}.

The UE updates the KID and/or the K_{AKMA} based on the received KID and/or K_{AKMA} update request, the received KID, or the ninth indication information.

After completing updating the KID, the AUSF may send the new KID to the AAnF, and then the AAnF forwards the new KID to the AF. The AF sends the new KID to the UE to complete KID update performed by the UE.

Alternatively, the AUSF may send the KID update request to the AAnF, the AAnF forwards the KID update request to the AF, then the AF sends the KID update request to the UE, and the UE completes update of the KID by using the KID update request.

Alternatively, the AUSF may send the seventh indication information to the AAnF; the AAnF generates the eighth indication information based on the seventh indication information and sends the eighth indication information to the AF; the AF generates the ninth indication information based on the eighth indication information and sends the ninth indication information to the UE; and the UE completes updating the KID based on the ninth indication information.

Indication information such as the seventh indication information, the eighth indication information, and the ninth indication information may be included in the KID and/or the K_{AKMA} update request, or may be added to another communication message. Content of the indication information may be the same or different. Step 606 and step 607 and step 606' to step 608' in FIG. 6A are two optional implementations, and a method in step 601 to step 605 may be combined with any one of the two methods.

After updating the KID, the UE may subsequently initiate an application session establishment request to the AF based on the new KID.

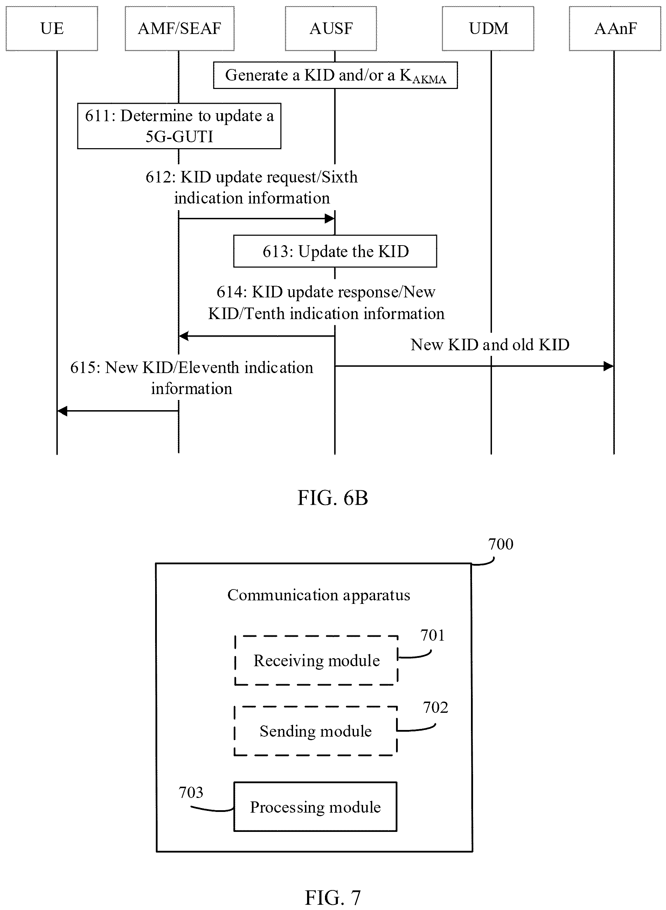

FIG. 6B is a schematic flowchart of another method for updating a KID and/or a K_{AKMA} according to an embodiment of this application. As shown in FIG. 6B, the method includes the following steps.

611: An AMF/SEAF determines to update a 5G-GUTI of UE. Optionally, the AMF/SEAF updates the 5G-GUTI of the UE.

612: The AMF/SEAF performs any one or more of the following operations:

The AMF/SEAF sends a KID and/or K_{AKMA} update request or sixth indication information to an AUSF. The sixth indication information is used to indicate any one or more of the following: that the AUSF updates the KID and/or the K_{AKMA}; and that the 5G-GUTI of the UE has been updated.

The AMF/SEAF initiates a primary authentication procedure.

The AMF/SEAF sends an authentication service request to the AUSF.

The AMF/SEAF sends a KID and/or K_{AKMA} update request or x^{th} indication information to the UE. The x^{th} indication information is used to indicate any one or more of the following: that the UE updates the KID and/or the K_{AKMA}; that the UE generates a new KID and/or a new K_{AKMA}; and that a network side (for example, the AUSF) has updated the KID and/or the K_{AKMA}.

613: The AUSF updates the KID and/or K_{AKMA} based on the received KID and/or K_{AKMA} update request or the sixth indication information, and generates a new KID and/or a new K_{AKMA}.

Alternatively, the AUSF receives the authentication service request sent by the AMF/SEAF, and the AUSF initiates an authentication service request to a UDM, where the authentication service request is used to request to obtain an authentication vector.

When determining to update the 5G-GUTI and before or after optionally updating the 5G-GUTI, the AMF/SEAF sends the KID and/or K_{AKMA} update request or the sixth indication information to the AUSF. The AMF/SEAF may send the sixth indication information by using an existing communication message between the AMF/SEAF and the AUSF, or the AMF/SEAF may send the sixth indication information by using a newly defined communication message between the AMF/SEAF and the AUSF.

The 5G-GUTI is an identifier that is constantly updated. Using the 5G-GUTI can reduce use of a permanent identifier of the UE displayed in communication, to improve security. When the 5G-GUTI is updated, the KID is also updated. This can prevent the UE from being tracked by using the KID, and improve communication security of the UE.

Similarly, if the AUSF updates the KID and/or the K_{AKMA}, the UE also needs to update the KID and/or the K_{AKMA}. The KID in the UE may be updated. As shown in FIG. 6B, the process may include the following steps.

614: After the AUSF generates the new KID and/or the new K_{AKMA}, the AUSF sends a KID and/or K_{AKMA} update request, the new KID, or tenth indication information to the AMF/SEAF. The tenth indication information is used to indicate any one or more of the following: to update the KID and/or the K_{AKMA}; to generate the new KID and/or the new K_{AKMA}; and that the AMF/SEAF initiates primary authentication. After generating the new KID and/or the new K_{AKMA}, the AUSF sends the updated KID and/or the updated K_{AKMA} to an AAnF.

Alternatively, after obtaining the authentication vector from the UDM, the AUSF sends an authentication service response to the AMF/SEAF.

615: The AMF/SEAF sends a KID and/or K_{AKMA} update request, the received KID, or eleventh indication information to the UE based on the received KID and/or K_{AKMA} update request, the new KID, or the tenth indication information.

In this embodiment, the UE updates the KID and/or K_{AKMA} based on the received KID and/or K_{AKMA} update request, the eleventh indication information, or the x^{th} indication information, and generates the new KID and/or the new K_{AKMA}. After receiving the KID, the UE stores and uses the KID, and generate the new K_{AKMA}.

In this embodiment of this application, update of the KID may alternatively include update of the corresponding K_{AKMA}. To be specific, after the AUSF or the UE receives the KID update request, the AUSF or the UE updates the K_{AKMA} and/or the KID.

In this embodiment of this application, a threat of tracking of the UE is reduced by updating the KID, and the communication security is improved.

The foregoing mainly describes the solutions provided in this application from a perspective of interaction between network elements. It may be understood that in the foregoing implementations, to implement the foregoing functions, the network elements include corresponding hardware structures and/or software modules for performing the foregoing functions. A person skilled in the art should easily be aware that, in combination with units and algorithm steps of the examples described in the embodiments disclosed in this specification, this application can be implemented by hardware or a combination of hardware and computer software. Whether a function is performed by the hardware or the hardware driven by the computer software depends on particular applications and design constraints of the technical solutions. A person skilled in the art may use different methods to implement the described functions for each particular application, but it should not be considered that the implementation goes beyond the scope of this application.

In the embodiments of this application, the terminal, the control plane network element, the service function network element, the management function network element, or the another network device may be divided into functional modules based on the foregoing method examples. For example, the functional modules may be divided based on functions, or two or more functions may be integrated into one processing module. The integrated module may be implemented in a form of hardware, or may be implemented in a form of a software functional module. It should be noted that, in the embodiments of this application, division into the modules is an example, and is merely logical function division. In an actual implementation, another division manner may be used.

FIG. 7 is a communication apparatus 700 according to an embodiment of this application. The communication apparatus 700 may be configured to perform the key obtaining method and specific embodiments that are applied to an AUSF network element and that are in FIG. 4A to FIG. 4F. The apparatus may be a terminal or a chip that may be configured in a terminal. In a possible implementation, as shown in FIG. 7, the communication apparatus 700 includes a processing module 703.

The processing module 703 is configured to obtain an authentication and key management for applications anchor key K_{AKMA} and/or a unique key identifier KID of the K_{AKMA}.

Optionally, the communication apparatus 700 further includes a receiving module 701, configured to receive a first message sent by an access and mobility management function or a security anchor function AMF/SEAF.

The processing module 703 is configured to obtain the KID and/or the K_{AKMA} based on the first message.

Optionally, the first message includes the KID, and the processing module 703 is specifically configured to: obtain the KID in the first message, and/or generate the K_{AKMA} based on the KID.

Optionally, the first message includes first indication information, and the processing module 703 is specifically configured to generate the KID and/or the K_{AKMA} based on the first indication information.

Optionally, the communication apparatus 700 further includes a sending module 702, configured to send a second message to a unified data management UDM function based on the first message, where the second message includes a permission obtaining indication, the permission obtaining indication is used to obtain first permission information of UE, and the first permission information is used to indicate that the UE is capable of using an authentication and key management for applications AKMA service.

The processing module 703 is configured to: when it is determined that the first permission information of the UE is obtained, generate the KID and/or the K_{AKMA}.

Optionally, the receiving module 701 is configured to receive a third message sent by the UDM, where the third message includes third indication information. The processing module 703 is configured to generate the KID and/or the K_{AKMA} based on the third indication information.

Optionally, the processing module 703 may be a chip, an encoder, an encoding circuit, or another integrated circuit that can implement the method in this application.

The receiving module 701 may be an interface circuit or a transceiver.

The specific methods and the embodiments have been described above, and the apparatus 700 is configured to perform the key obtaining method corresponding to the terminal. Therefore, for specific descriptions of the key obtaining method, and especially a function of the processing module 703, refer to related parts in the corresponding embodiment. Details are not described herein again.

Optionally, the apparatus 700 may further include a storage module (not shown in the figure). The storage module may be configured to store data and/or signaling. The storage module may be coupled to the processing module 703, or may be coupled to the receiving module 701 or the sending module 702. For example, the processing module 703 may be configured to read the data and/or the signaling in the storage module, to perform the key obtaining method in the foregoing method embodiments.

Optionally, the communication apparatus 700 may be applied to the key obtaining method and the specific embodiments that are applied to the AUSF network element in FIG. 5, FIG. 6A, or FIG. 6B. Details are not described herein again.

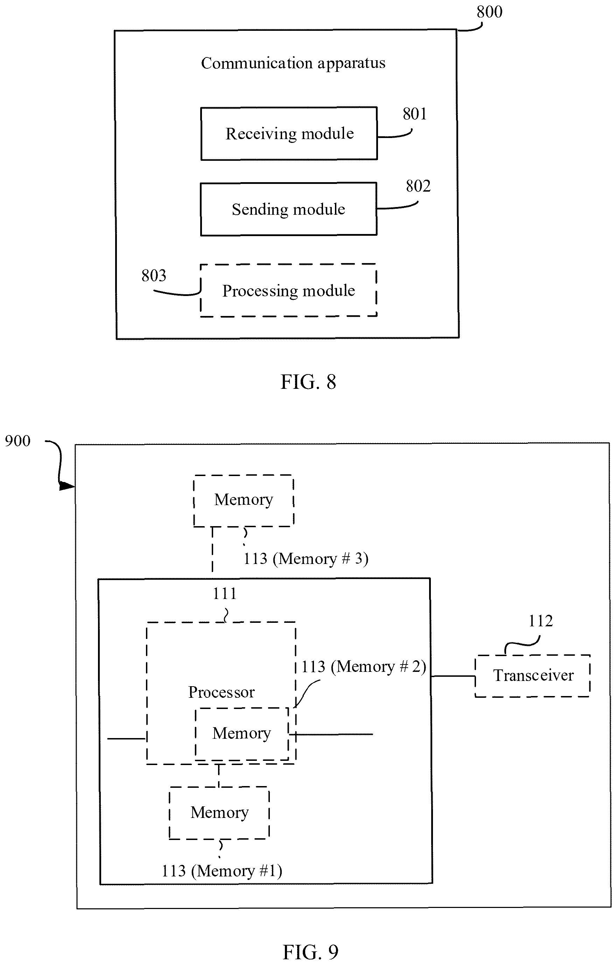

FIG. 8 is another communication apparatus 800 according to an embodiment of this application. The communication apparatus 800 may be configured to perform the key obtaining method and specific embodiments that are applied to an AMF/SEAF network element and that are in FIG. 4A to FIG. 4F. The apparatus may be a terminal or a chip that may be configured in a terminal. In a possible implementation, as shown in FIG. 8, the communication apparatus 800 includes a receiving module 801 and a sending module 802.

The receiving module 801 is configured to obtain a fourth message from an AUSF.

The processing module 802 is configured to send a fifth message to UE based on the fourth message, so that the UE obtains a KID and/or a K_{AKMA} based on the fifth message.

Optionally, the communication apparatus 800 includes a processing module 803, configured to generate the fifth message based on the fourth message.

Optionally, the sending module 801 is further configured to send a first message to the AUSF, so that the AUSF generates the KID and/or the K_{AKMA} based on the first message.

Optionally, the processing module 803 may be a chip, an encoder, an encoding circuit, or another integrated circuit that can implement the method in this application.

The receiving module 801 may be an interface circuit or a transceiver.

The specific methods and the embodiments have been described above, and the apparatus 800 is configured to perform the key obtaining method corresponding to the terminal. Therefore, for the specific descriptions of the key obtaining method, and especially functions of the receiving module 801 and the sending module 802, refer to related parts in corresponding embodiments. Details are not described herein again.

Optionally, the apparatus 800 may further include a storage module (not shown in the figure). The storage module may be configured to store data and/or signaling. The storage module may be coupled to the processing module 803, or may be coupled to the receiving module 801 or the sending module 802. For example, the processing module 803 may be configured to read the data and/or the signaling in the storage module, to perform the key obtaining method in the foregoing method embodiments.

Optionally, the communication apparatus 800 may be applied to the key obtaining method and the specific embodiments that are applied to the AMF/SEAF network element in FIG. 5, FIG. 6A, or FIG. 6B. Details are not described herein again.

When the processing module 703 or 803 is a processor, the receiving module 701 or 801, and the sending module 702 or 802 constitute a transceiver, the communication apparatus 700 or the communication apparatus 800 in the embodiment of this application may be a communication apparatus 900 shown in FIG. 9.

FIG. 9 is a schematic diagram of a hardware structure of a communication apparatus according to an embodiment of this application. For a structure of an AUSF network element or an AMF/SEAF, refer to the structure shown in FIG. 9. The communication apparatus 900 includes a processor 111 and a transceiver 112, where the processor 111 and the transceiver 112 are electrically coupled.

The processor 111 is configured to execute some or all of computer program instructions in the memory, and when the some or all of the computer program instructions are executed, the apparatus is enabled to perform the method in any one of the foregoing embodiments.

The transceiver 112 is configured to communicate with another device, for example, obtain a fourth message from the AUSF, and send a fifth message to UE based on the fourth message, so that the UE obtains the KID and/or the K_{AKMA} based on the fifth message.

Optionally, the apparatus further includes the memory 113, configured to store the computer program instructions. Optionally, the memory 113 (a memory #1) is located in the apparatus, the memory 113 (a memory #2) is integrated with the processor 111, or the memory 113 (a memory #3) is located outside the apparatus.

It should be understood that the communication apparatus 900 shown in FIG. 9 may be a chip or a circuit. For example, the communication apparatus 900 may be a chip or a circuit that may be disposed in a terminal apparatus or the communication apparatus. Alternatively, the transceiver 112 may be a communication interface. The transceiver includes a receiver and a transmitter. Further, the communication apparatus 900 may further include a bus system.

The processor 111, the memory 113, and the transceiver 112 are connected through the bus system. The processor 111 is configured to execute the instructions stored in the memory 113, to control the transceiver to receive a signal and send a signal, and complete steps of the first device or the second device in the implementation method in this application. The memory 113 may be integrated into the processor 111, or may be disposed separately from the processor 111.

In an implementation, it may be considered that functions of the transceiver 112 are implemented by using a transceiver circuit or a dedicated transceiver chip. It may be considered that the processor 111 may be implemented by using a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), general array logic (generic array logic, GAL) and another programmable logic device, a discrete gate or transistor logic device, a discrete hardware component, or any combination thereof. The general-purpose processor may be a microprocessor, or the processor may be any conventional processor or the like.

It may further be understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

An embodiment of this application provides a computer storage medium, storing computer programs. The computer program is used to perform the method corresponding to the AUSF network element in the foregoing embodiments.

An embodiment of this application provides a computer storage medium, storing computer programs. The computer program is used to perform the method corresponding to the AMF/SEAF network element in the foregoing embodiments.

An embodiment of this application provides a computer program product including instructions. When the computer program product runs on a computer, the computer is enabled to perform the method corresponding to the AUSF network element in the foregoing embodiments.

An embodiment of this application provides a computer program product including instructions. When the computer program product runs on a computer, the computer is enabled to perform the method corresponding to the AMF/SEAF network element in the foregoing embodiments.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Further embodiments of the present invention are provided in the following. It should be noted that the numbering used in the following section does not necessarily need to comply with the numbering used in the previous sections.

Embodiment 1. A key obtaining method, applied to an authentication server function AUSF, wherein the method comprises:
obtaining an authentication and key management for applications anchor key K_{AKMA} and/or a unique key identifier KID of the K_{AKMA}.

Embodiment 2. The method according to embodiment 1, wherein the obtaining an authentication and key management for applications anchor key K_{AKMA} and/or a unique key identifier KID of the K_{AKMA} comprises:
receiving a first message sent by an access and mobility management function or a security anchor function AMF/SEAF, and obtaining the KID and/or the K_{AKMA} based on the first message.

Embodiment 3. The method according to embodiment 2, wherein the first message comprises the KID, and the obtaining the KID and/or the K_{AKMA} based on the first message comprises: obtaining the KID in the first message and/or generating the K_{AKMA} based on the KID.

Embodiment 4. The method according to embodiment 2, wherein the first message comprises second indication information, and the obtaining the KID and/or the K_{AKMA} based on the first message comprises:
generating the KID and/or the K_{AKMA} based on the second indication information.

Embodiment 5. The method according to any one of embodiments 2 to 4, wherein after the first message is received, the obtaining the KID and/or the K_{AKMA} based on the first message further comprises:
sending a second message to a unified data management UDM function based on the first message, wherein the second message comprises a permission obtaining indication, the permission obtaining indication is used to obtain first permission information of the UE, and the first permission information is used to indicate that the UE is capable of using an authentication and key management for applications AKMA service; and
when it is determined that the first permission information of the UE is obtained, generating the KID and/or the K_{AKMA}.

Embodiment 6. The method according to any one of embodiments 3 to 5, wherein the first message is an authentication service request, and the authentication service request is used to request the AUSF to perform authentication on the UE.

Embodiment 7. The method according to any one of embodiments 3 to 5, wherein the authentication service request comprises an authentication response obtained when the AMF/SEAF initiates an authentication request to the UE.

Embodiment 8. The method according to embodiment 5, wherein the second message is used to request an authentication vector of the UE from the UDM, or the second message is used to notify the UDM of an authentication result.

Embodiment 9. The method according to embodiment 1, wherein the obtaining an authentication and key management for applications anchor key K_{AKMA} and/or a unique key identifier KID of the K_{AKMA} comprises:
receiving a third message sent by the UDM, wherein the third message comprises third indication information, and the third indication information is used to indicate the AUSF to generate the KID and/or the K_{AKMA}; and
generating the KID and/or the K_{AKMA} based on the third indication information.

Embodiment 10. The method according to embodiment 9, wherein the third message is a response message for an authentication service request, and is used to send an authentication vector of UE to the AUSF.

Embodiment 11. The method according to embodiment 9, wherein the third message is an authentication result confirmation response message, and is used to respond to an authentication result confirmation request sent by the AUSF.

Embodiment 12. A key obtaining method, applied to access and mobility management or a security anchor function AMF/SEAF, wherein the method comprises:
obtaining a fourth message from an AUSF; and
generating a fifth message based on the fourth message, and sending the fifth message to the UE, so that the UE obtains the KID and/or the K_{AKMA} based on the fifth message.

Embodiment 13. The method according to embodiment 12, wherein the fifth message comprises the KID, and is used to enable the UE to obtain the KID in the fifth message, and/or generate the K_{AKMA} based on the KID.

Embodiment 14. The method according to embodiment 12, wherein the fifth message comprises fifth indication information, and the fifth indication information is used to indicate the UE to generate the KID and/or the K_{AKMA}.

Embodiment 15. The method according to any one of embodiments 12 to 14, wherein before the fourth message is received, the method further comprises:
sending a first message to the AUSF, so that the AUSF generates the KID and/or the K_{AKMA} based on the first message.

Embodiment 16. A key obtaining method, wherein the method comprises:
sending, by an authentication server function AUSF, an authentication service request message to a unified data management UDM function;
sending, by the UDM, an authentication service response message to the AUSF, wherein the authentication service response message comprises first permission information, and the first permission information is used to indicate to generate a key K_{AKMA} for user equipment UE;
generating, by the AUSF in response to the authentication service response message, the K_{AKMA} and a key identifier KID corresponding to the K_{AKMA}; and
sending, by the AUSF, the generated K_{AKMA} and the generated KID to an authentication and key management for applications anchor function AAnF.

Embodiment 17. The method according to embodiment 16, wherein the generating, by the AUSF, the KID comprises:
generating, by the AUSF, the KID based on routing information, an identifier of the UE, and a public land mobile network identifier PLMN ID.

Embodiment 18. The method according to embodiment 17, wherein the identifier of the UE is a subscription permanent identifier SUPI.

Embodiment 19. The method according to embodiment 16, wherein the generating, by the AUSF, the K_{AKMA} comprises:
generating, by the AUSF, the K_{AKMA} based on a key Kausf and an identifier of the UE.

Embodiment 20. The method according to any one of embodiments 16 to 19, wherein before the sending, by an authentication server function AUSF, an authentication service request message to a unified data management UDM function, the method further comprises:
receiving, by the AUSF, the authentication service request sent by a security anchor function SEAF.

Embodiment 21. The method according to embodiment 20, wherein the method further comprises:
sending, by the AUSF, an authentication service response to the SEAF.

Embodiment 22. A key obtaining system, wherein the system comprises:
An authentication server function AUSF, configured to send an authentication service request message to a unified data management UDM function, wherein
the UDM is configured to send an authentication service response message to the AUSF, wherein the authentication service response message comprises first permission information, and the first permission information is used to indicate to generate a key K_{AKMA} for user equipment UE; and
the AUSF is further configured to: generate, in response to the authentication service response message, the K_{AKMA} and a key identifier KID corresponding to the K_{AKMA}; and send the generated K_{AKMA} and the generated KID to an authentication and key management for applications anchor function AAnF.

Embodiment 23. The system according to embodiment 22, wherein the generating the KID comprises: generating the KID based on routing information, an identifier of the UE, and a public land mobile network identifier PLMN ID.

Embodiment 24. The system according to embodiment 23, wherein the identifier of the UE is a subscription permanent identifier SUPI.

Embodiment 25. The system according to embodiment 22, wherein the generating the K_{AKMA} comprises: generating the K_{AKMA} based on a key Kausf and an identifier of the UE.

Embodiment 26. The system according to any one of embodiments 22 to 25, wherein the AUSF is further configured to receive the authentication service request sent by a security anchor function SEAF.

Embodiment 27. The system according to embodiment 26, wherein the AUSF is further configured to send an authentication service response to the SEAF.

Embodiment 28. A key obtaining method, wherein the method comprises:
sending, by an authentication server function AUSF, an authentication service request message to a unified data management UDM function;
receiving, by the AUSF, an authentication service response message sent by the UDM, wherein the authentication service response message comprises first permission information, and the first permission information is used to indicate to generate a key K_{AKMA} for user equipment UE;
generating, by the AUSF in response to the authentication service response message, the K_{AKMA} and a key identifier KID corresponding to the K_{AKMA}; and
sending, by the AUSF, the generated K_{AKMA} and the generated KID to an authentication and key management for applications anchor function AAnF.

Embodiment 29. The method according to embodiment 28, wherein the generating, by the AUSF, the KID comprises:
generating, by the AUSF, the KID based on routing information, an identifier of the UE, and a public land mobile network identifier PLMN ID.

Embodiment 30. The method according to embodiment 29, wherein the identifier of the UE is a subscription permanent identifier SUPI.

Embodiment 31. The method according to embodiment 28, wherein the generating, by the AUSF, the K_{AKMA} comprises:
generating, by the AUSF, the K_{AKMA} based on a key Kausf and an identifier of the UE.

Embodiment 32. An AUSF network element, comprising a processing module, wherein the processing module is configured to:
obtain an authentication and key management for applications anchor key K_{AKMA} and/or a unique key identifier KID of the K_{AKMA}.

Embodiment 33. The network element according to embodiment 32, wherein the AUSF network element further comprises a receiving module, configured to receive a first message sent by an access and mobility management function or a security anchor function AMF/SEAF; and
the processing module is configured to obtain the KID and/or the K_{AKMA} based on the first message.

Embodiment 34. The network element according to embodiment 33, wherein the first message comprises the KID, and the processing module is specifically configured to:
obtain the KID in the first message, and/or generate the K_{AKMA} based on the KID.

Embodiment 35. The network element according to embodiment 33, wherein the first message comprises second indication information, and the processing module is specifically configured to generate the KID and/or the K_{AKMA} based on the second indication information.

Embodiment 36. The network element according to any one of embodiments 33 to 35, wherein the AUSF network element further comprises a sending module, configured to send a second message to a unified data management UDM function based on the first message, wherein the second message comprises a permission obtaining indication, the permission obtaining indication is used to obtain first permission information of the UE, and the first permission information is used to indicate that the UE is capable of using an authentication and key management for applications AKMA service; and
the processing module is configured to: when it is determined that the first permission information of the UE is obtained, generate the KID and/or the K_{AKMA}.

Embodiment 37. The network element according to embodiment 32, wherein the receiving module is configured to receive a third message sent by the UDM, wherein the third message comprises third indication information; and
the processing module is configured to generate the KID and/or the K_{AKMA} based on the third indication information.

Embodiment 38. An AMF/SEAF network element, wherein the network element comprises:
a receiving module, configured to obtain a fourth message from an AUSF; and
a sending module, configured to send a fifth message to UE based on the fourth message, so that the UE obtains the KID and/or the K_{AKMA} based on the fifth message.

Embodiment 39. The network element according to embodiment 38, wherein the sending module is further configured to send a first message to the AUSF, so that the AUSF generates the KID and/or the K_{AKMA} based on the first message.

Embodiment 40. A key obtaining apparatus, wherein the apparatus comprises:
a transceiver, configured to: send an authentication service request message to a unified data management UDM function; and receive an authentication service response message sent by the UDM, wherein the authentication service response message comprises first permission information, and the first permission information is used to indicate to generate a key K_{AKMA} for user equipment UE; and
a processor, configured to generate, in response to the authentication service response message, the K_{AKMA} and a key identifier KID corresponding to the K_{AKMA}, wherein
the transceiver is further configured to send the generated K_{AKMA} and the generated KID to an authentication and key management for applications anchor function AAnF.

Embodiment 41. The apparatus according to embodiment 40, wherein the processor is specifically configured to generate the KID based on routing information, an identifier of the UE, and a public land mobile network identifier PLMN ID.

Embodiment 42. The apparatus according to embodiment 41, wherein the identifier of the UE is a subscription permanent identifier SUPI.

Embodiment 43. The apparatus according to embodiment 40, wherein the processor is specifically configured to generate the K_{AKMA} based on a key Kausf and an identifier of the UE.

Embodiment 44. A communication apparatus, wherein the apparatus comprises at least one processor, and the at least one processor is coupled to at least one memory; and
the at least one processor is configured to execute computer programs or instructions stored in the at least one memory, to enable the apparatus to perform the method according to any one of embodiments 1 to 11, to enable the apparatus to perform the method according to any one of embodiments 12 to 15, to enable the apparatus to perform the method according to any one of embodiments 16 to 21, or to enable the apparatus to perform the method according to any one of embodiments 28 to 31.

Embodiment 45. A readable storage medium, configured to store instructions, wherein when the instructions are executed, the method according to any one of embodiments 1 to 11 is implemented, the method according to any one of embodiments 12 to 15 is implemented, the method according to any one of embodiments 16 to 21 is implemented, or the method according to any one of embodiments 28 to 31 is implemented.

Embodiment 46. A communication apparatus, comprising a processor and an interface circuit, wherein
the interface circuit is configured to exchange code instructions to the processor; and
the processor is configured to run the code instructions to perform the method according to any one of embodiments 1 to 11, the processor is configured to run the code instructions to perform the method according to any one of embodiments 12 to 15, the processor is configured to run the code instructions to perform the method according to any one of embodiments 16 to 21, or the processor is configured to run the code instructions to perform the method according to any one of embodiments 28 to 31.

Embodiment 47. A computer program product, wherein when a computer reads and executes the computer program product, the computer is enabled to perform the method according to any one of embodiments 1 to 11, 12 to 15, 16 to 21, or 28 to 31.

Embodiment 48. A communication system, comprising the serving network element according to any one of embodiments 32 to 37, or the management network element according to any one of embodiments 38 and 39.

## Claims

1. A key obtaining method, wherein the method comprises:
sending (423, 451), by an authentication server function, AUSF, an authentication service request message to a unified data management, UDM, function;
receiving (423, 451), by the UDM function, the authentication service request message;
sending (424, 452) an authentication service response message, by the UDM function, wherein the authentication service response message comprises first permission information, and the first permission information is used to indicate to generate a key K_{AKMA} for user equipment, UE;
receiving (424, 452), by the AUSF, the authentication service response message;
generating (425, 453), by the AUSF in response to the authentication service response message, the K_{AKMA} and a key identifier, KID, corresponding to the K_{AKMA}, based on the first permission information; and
sending, by the AUSF, the generated K_{AKMA} and the generated KID to an authentication and key management for applications anchor function, AAnF.

2. The method according to claim 1, wherein the generating, by the AUSF, the KID comprises:
generating, by the AUSF, the KID based on routing information, an identifier of the UE, and a public land mobile network identifier, PLMN ID.

3. The method according to claim 2, wherein the identifier of the UE is a subscription permanent identifier, SUPI.

4. The method according to claim 1, wherein the generating, by the AUSF, the K_{AKMA} comprises:
generating, by the AUSF, the K_{AKMA} based on a key K_{AUSF} and an identifier of the UE.

5. The method according to any one of claims 1-4, wherein the method further comprises:
receiving, by the AUSF, an authentication service request sent by a security anchor function, SEAF, and
sending, by the AUSF, an authentication service response to the SEAF.

6. The method according to claim 5, wherein the method further comprises:
sending, by the SEAF, the authentication service request; and
receiving, by the SEAF, the authentication service response.

7. A key obtaining method, wherein the method comprises:
sending (423, 451), by an authentication server function, AUSF, an authentication service request message to a unified data management, UDM, function;
receiving (424, 452), by the AUSF, an authentication service response message sent by the UDM function, wherein the authentication service response message comprises first permission information, and the first permission information is used to indicate to generate a key K_{AKMA} for user equipment, UE;
generating (425, 453), by the AUSF in response to the authentication service response message, the K_{AKMA} and a key identifier, KID, corresponding to the K_{AKMA}, based on the first permission information;
sending, by the AUSF, the generated K_{AKMA} and the generated KID to an authentication and key management for applications anchor function, AAnF; and
receiving, by the AAnF, the generated K_{AKMA} and the generated KID.

8. The method according to claim 7, wherein the generating, by the AUSF, the KID comprises:
generating, by the AUSF, the KID based on routing information, an identifier of the UE, and a public land mobile network identifier, PLMN ID.

9. The method according to claim 8, wherein the identifier of the UE is a subscription permanent identifier, SUPI.

10. The method according to claim 7, wherein the generating, by the AUSF, the K_{AKMA} comprises:
generating, by the AUSF, the K_{AKMA} based on a key K_{AUSF} and an identifier of the UE.

11. A key obtaining system, wherein the system comprises: an authentication server function, AUSF, and an authentication and key management for applications anchor function, AAnF;
the communication apparatus is configured to:
send an authentication service request message to a unified data management, UDM, function;
receive an authentication service response message sent by the UDM function, wherein the authentication service response message comprises first permission information, and the first permission information is used to indicate to generate a key K_{AKMA} for user equipment, UE;
generate, in response to the authentication service response message, the K_{AKMA} and a key identifier, KID, corresponding to the K_{AKMA}, based on the first permission information;
send the generated K_{AKMA} and the generated KID to the AAnF; and
the AAnF is configured to:
receive the generated K_{AKMA} and the generated KID.

12. The system according to claim 11, wherein the system further comprises:
the UDM function, configured to send the authentication service response message to the AUSF.

13. The system according to any one of claims 11-12, wherein the AUSF is further configured to receive an authentication service request sent by a security anchor function, SEAF, and send an authentication service response to the SEAF.

14. The system according to claim 13, wherein the system further comprises:
the SEAF, configured to: send the authentication service request to the communication apparatus and receive the authentication service response from the communication apparatus.

15. The system according to any one of claims 11-14, wherein the AUSF is further configured to:
generate the KID based on routing information, an identifier of the UE, and a public land mobile network identifier, PLMN ID; and/or,
generate the K_{AKMA} based on a key K_{AUSF} and an identifier of the UE.
